# EUROPÄISCHE PATENTSCHRIFT

(11) **EP 4 083 106 B1**
(45) Veröffentlichungstag und Bekanntmachung des Hinweises auf die Patenterteilung: **10.04.2024**
(21) Anmeldenummer: 21171470.4
(22) Anmeldetag: 30.04.2021
(51) Int. Cl.: C08G 64/30

(54) **VERFAHREN ZUR HERSTELLUNG VON POLYCARBONAT MIT VERBESSERTER NACHHALTIGKEIT**
METHOD FOR THE PREPARATION OF POLYCARBONATE WITH IMPROVED SUSTAINABILITY
PROCESSUS DE PRODUCTION DE POLYCARBONATE À DURABILITÉ AMÉLIORÉE

(43) Veröffentlichungstag der Anmeldung: 02.11.2022
(73) Patentinhaber: Covestro Deutschland AG, 51373 Leverkusen (DE)
(72) Erfinder: BULAN, Andreas, 40764 Langenfeld (DE); HEIJL, Jan, 9940 Evergem (BE); WEBER, Rainer, 51519 Odenthal (DE)
(74) Vertreter: Levpat

(56) Entgegenhaltungen:
- EP-A1- 2 371 807
- EP-A1- 3 708 698

## Beschreibung

Die Erfindung betrifft ein Verfahren zur Herstellung von Polycarbonat (Polycarbonat nachfolgend auch als PC bezeichnet) durch Synthese von Phosgen aus Kohlenmonoxid und Chlor, Umsetzung von Phosgen mit mindestens einem Diol, inbesondere Diarylalkohol, zu Polycarbonat , Bereitstellung eines Kohlendioxid Gasstroms und Reinigung des Kohlendioxid Gasstroms von Nebenbestandteilen und anschließende Umsetzung des Kohlendioxids zur Herstellung von Kohlenmonoxid, welches in der Phosgensynthese eingesetzt wird.

Die Erfindung betrifft weiter eine Ausführungsform in der die Verwertung von Polycarbonat-Verbindungen eines Polycarbonat-Materials , welches in Abfall vorliegt (nachfolgend auch als "Polycarbonat-Material Abfall" bezeichnet) zur Herstellung von chemikalischen Rohstoffen für die Herstellung von Polycarbonat, bei dem ausgehend von Polycarbonat-Material Abfall z. B. durch Pyrolyse, Kohlendioxid und Kohlenwasserstoffe und gegebenenfalls Kohlenmonoxid und Wasserstoff erzeugt werden, das Kohlendioxid durch Umsetzung mit Wasserstoff zu Kohlenmonoxid in einer sogenannten Reversen Wassergas Shift Reaktion (nachfolgend RWGS Reaktion genannt) erfolgt und das erhaltene Kohlenmonoxid über Phosgen zu Polycarbonat umgesetzt wird.

Die Erfindung betrifft besonders ein Verfahren zur emissionsarmen Herstellung von Polycarbonat unter Einsatz einer RWGS Reaktion und der Bereitstellung von Wasserstoff aus einer Wasserelektrolyse oder aus einer Elektrolyse zur Herstellung von Chlor, sowie der Nutzung des Sauerstoffs aus der Wasserelektrolyse zur Verbrennung von Polycarbonat enthaltenen Materialien zu Kohlendioxid und ggf. Verbrennung von Pyrolyserückständen erhalten aus Polycarbonat enthaltenen Materialien und Nutzung des jeweilig erhaltenen Kohlendioxids als Rohstoff für die RWGS Reaktion.

EP3708698A1 offenbart ein Verfahren zur Herstellung von Polycarbonat, umfassend die Herstellung von Phosgen durch Umsetzung von Chlor, erhalten aus einer Natriumchlorid-Elektrolyse, mit Kohlenmonoxid.

Ein Ansatz zum stofflichen Recycling von Polycarbonat ist die Alkoholyse, bei der die Carbonatgruppe des Polymers mit einem Alkohol zu Dialkyl- oder Diarylcarbonat und einem Diol umgesetzt wird. Nachteil dieser Methode ist, dass hierfür als Ausgangsstoff ein nahezu reines Polycarbonat gebraucht wird, d.h. das hierfür die zuvor erwähnten Blends als Ausgangsstoff wenig geeignet sind.

Aufgabe der vorliegenden Erfindung war es, ein nachhaltigeres Verfahren für die Polycarbonatherstellung unter Einbeziehung von Recyclingprozessen und Schließung der Wertschöpfungsketten zu finden. Bisher werden wesentliche Komponenten zur Polycarbonatherstellung wie das Kohlenmonoxid, Wasserstoff oder der Strom zum Betrieb der Elektrolysen wie der Wasserelektrolyse und der Chlor-Alkali-Elektrolyse aus fossilen Energieträgern hergestellt. So wird konventionell Kohlenmonoxid und Wasserstoff aus Erdgas bzw. aus Kohle mittels Reformingprozessen, und Chlor aus der Elektrolyse mit Strom, der unter Einsatz von fossilen Brennstoffen wie Öl, Kohle oder Erdgas hergestellt wurde, gewonnen.

Unter "Nachhaltigkeit" eines Verfahrens versteht der Fachmann in Anwendung der durch die UN geprägte Nachhatigkeits-Definition ("sustainable development") gemäß Brundtlandbericht der "Weltkommission für Umwelt und Entwicklung", dass durch die Ausführung des Verfahrens in der Gegenwart ein möglichst geringer bis gar kein Beitrag geleistet wird, dass künftige Generationen der Menschheit ihre eigenen Bedürfnisse nicht mehr befriedigen können, insbesondere Bedürfnisse mit Blick auf die Nutzung von Ressourcen wie z.B. fossiler Rohstoffe und insbesondere mit Blick auf die Schonung des Lebensraumes, wie z.B. den Schutz der Erdatmosphäre. Die Erfindung hat somit zur Aufgabe, die Produktion von Polycarbonat nachhaltiger als die aus dem Stand der Technik bekannten Produktionsmethoden zu gestalten. Der Beitrag der Produktion von Polycarbonat zu einer sinkenden Befriedigung der Bedürfnisse zukünftiger Generationen soll vermindert bis vermieden werden.

Eine Aufgabe der Erfindung ist es also, den Einsatz von fossilen Rohstoffen als Edukt für die Polycarbonatproduktion und gegebenenfalls auch den Einsatz von fossilen Rohstoffen zur Bereitstellung von Energie für die Polycarbonatproduktion zu vermindern. Insbesondere durch letztere Aufgabenstellung soll die Kohlendioxid-Bilanz (Carbon Footprint) der PolycarbonatProduktion zum Schutz der Erdatmosphäre weiter verbessert werden.

Ein Gegenstand der Erfindung ist somit ein Verfahren zur Herstellung von Polycarbonat umfassend mindestens folgende Schritte
Herstellung von zumindest Chlor und Wasserstoff durch Chloralkali-Elektrolyse von Alkalichlorid, bevorzugt Natriumchlorid, in wässriger Lösung,
Bereitstellung eines gereinigten CO₂ Gasstroms, der durch zumindest folgende Schritte hergestellt wurde:
   Bereitstellung eines CO₂ Gasstroms,
   Reinigung des CO₂ Gasstroms von Nebenbestandteilen (insbesondere von Stickoxiden, Schwefelverbindungen, Phosphorverbindungen, Staub, Wasser, Sauerstoff und HCl) wahlweise mittels Adsorption, Gaswäsche oder katalytischer Behandlung unter Erhalt eines Gasstroms gereinigten Kohlendioxids,
Einspeisung von Wasserstoff zusammen mit dem gereinigten CO₂ Gasstrom in eine RWGS Reaktionszone und Umsetzung der Edukte nach dem Prinzip der RWGS zu einem Produktgasgemisch enthaltend neben nicht umgesetztem Edukt zusätzlich Wasserdampf, CO und gegebenenfalls Nebenprodukte, insbesondere niedere Kohlenwasserstoffe, insbesondere bevorzugt Methan,
Abtrennung des Wassers des Wasserdampfes aus dem Produktgasgemisch,
Abtrennung von nicht umgesetztem Kohlendioxid aus dem aus der Abtrennung erhaltenen Gasgemischs der RWGS Reaktion, insbesondere mittels Aminwäsche und Rückführung des nicht umgesetzten Kohlendioxids in die RWGS Reaktion,
Abtrennung des in der RWGS Reaktion nicht umgesetzten Wasserstoffs aus dem nach der Abtrennung erhaltenen Gasgemisch von Kohlenmonoxid und Wasserstoff, insbesondere unter Verwendung einer Coldbox, und Rückführung des Wasserstoffs in die RWGS Reaktion,
Einspeisung des verbliebenen Kohlenmonoxids aus der Abtrennung in die Phosgensynthese,
Zuführung des zuvor gebildeten Chlors (22) in die Phosgensynthese,
Synthese von Phosgen aus Kohlenmonoxid und Chlor,
Umsetzung von zumindest Phosgen mit mindestens einem Diol zu mindestens einem Polycarbonat.

Unter "niederen Kohlenwasserstoffen" werden erfindungsgemäß Kohlenwasserstoffe mit 1 bis 8 Kohlenstoffatomen verstanden.

Unter "Aminwäsche" des Produktgases der RWGS Reaktion wird hier insbesondere die grundsätzlich bekannte Wäsche des Gasgemisches nach dem Prinzip der Chemisorption mit Aminen wie Monoethanolamin (MEA) Diethanolamin (DEA), Methyldiethanolamin (MDEA) oder Diglycolamin (DGA) verstanden, welche schon bei relativ niedrigem Druck in einer Absorptionskolonne eine hohe Reinheit des gereinigten Gasgemisches erreicht.

Unter "regenerativer Energie" versteht der Fachmann Energie aus einer Energiequelle, die sich nicht erschöpft, wie z.B. Windenergie, Wasserenergie oder Sonnenenergie.

Für die Bereitstellung von Kohlenmonoxid für die Synthese des Phosgens wird ein Kohlendioxid-Gasstrom benötigt, der gereinigt wird und in die RWGS Reaktion eingespeist wird. Das, bevorzugt aus der Verwertung des Polycarbonat-Material Abfalls hergestellte, Kohlenmonoxid wird mit Chlor zu Phosgen und dieses mit Diol, insbesondere Diarylalkohol, zu Polycarbonat umgesetzt. Somit ist ein Teil der Wertschöpfungskette geschlossen. Bei Einsatz von CO₂ und elektrischem Strom aus regenerativen Energiequellen für die optionale Wasserelektrolyse kann Polycarbonat mit weiter verbesserter Nachhaltigkeit hergestellt werden. Der Anteil von fossilem Kohlenstoff im Polycarbonat soll deutlich vermindert werden.

Nachfolgend wird exemplarisch beschrieben, wie sich die für die Verwertung eingesetzte Polycarbonat-Verbindung des Polycarbonat-Material Abfalls, sowie das gemäß vorliegendem Verfahren produzierte Polycarbonat, herstellen lässt.

Die Herstellung kann beispielsweise nach dem bekannten Phasengrenzflächenverfahren erfolgen, wie beispielsweise beschrieben in Schnell, "Chemistry and Physics of Polycarbonates", Polymer Reviews, Volume 9, Interscience Publishers, New York, London, Sydney 1964, S. 33-70; Freitag et al., BAYER AG, "Polycarbonates" in Encyclopedia of Polymer Science and Engineering, Volume 1 1, Second Edition, 1988, S. 651-692.

Zur Herstellung von Polycarbonat nach dem Phasengrenzflächenverfahren wird ein in wässrig-alkalischer Lösung oder Suspension vorgelegtes Dinatriumsalz eines Diphenols oder ein in wässrig-alkalischer Lösung oder Suspension vorgelegtes Gemisch mehrerer verschiedener Diphenole in Gegenwart eines inerten organischen Lösungsmittels oder Lösungsmittelgemisches mit einem Carbonylhalogenid, insbesondere Phosgen umgesetzt, wobei das inerte organische Lösungsmittel Lösungsmittelgemisch neben der wässrigen eine zweite organische Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten aufkondensiert, wobei das Molekulargewicht durch geeignete Kettenabbrecher, beispielsweise monofunktionelle Phenole wie Phenol oder Alkylphenole, insbesondere Phenol, p-tert.Butylphenol, iso-Octylphenol oder Cumylphenol, kontrolliert werden kann. Die organische Phase wird schließlich abgetrennt und das Polycarbonat durch verschiedene Aufarbeitungsschritte daraus isoliert. Beispielsweise für Bisphenol A kann die Reaktionen wie folgt dargestellt werden:

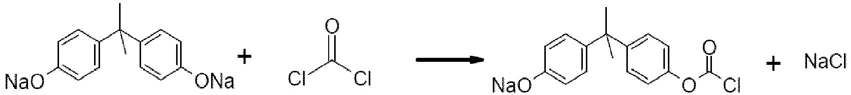

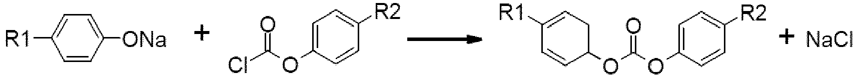

Wobei R1 und R2 unabhängig voneinander wachsende Polycarbonatketten sein können oder Kettenabbrecher.

Es ist daher im Rahmen einer bevorzugten Ausführungsform des Verfahrens vorteilhaft, wenn der Umsetzung von zumindest Phosgen mit mindestens einem Diol zu mindestens einem Polycarbonat zusätzlich Alkalihydroxid-Lösung (insbesondere wässrige NatriumhydroxidLösung) zugeführt wird, die besonders bevorzugt zumindest teilweise durch den Betrieb der Chloralkali-Elektrolyse gebildet wird.

Kontinuierliche Verfahren zur Herstellung von Kondensaten unter Verwendung von Carbonylhalogeniden, insbesondere Phosgen, - beispielsweise die Herstellung von aromatischen Polycarbonaten, oder Polyestercarbonaten oder ihrer Oligomeren - nach dem Zweiphasen-Grenzflächenverfahren haben in der Regel den Nachteil, dass zur Beschleunigung der Reaktion und/oder Verbesserung der Phasentrennung mehr Phosgen eingesetzt werden muss, als für die Produktbilanz notwendig ist. Der Phosgen-Überschuss wird dann in der Synthese in Form von Nebenprodukten - beispielsweise zusätzlichem Kochsalz oder Alkalicarbonat-Verbindungen - abgebaut. Typischerweise werden für das kontinuierliche Zweiphasen-Grenzflächenverfahren zur Herstellung von aromatischen Polycarbonaten Phosgenüberschüsse um die 20 Mol-% bezogen auf das zugegebene Diphenolat eingesetzt.

Unter einem Polycarbonat sowie einer Polycarbonat-Verbindung im Sinne der vorliegenden Erfindung ist im Rahmen einer bevorzugten Ausführungsform eine polymere Verbindung, ausgewählt aus einem Homo- oder Copolymer zu verstehen, wobei mindestens eine Wiederholungseinheit mindestens eine Struktureinheit 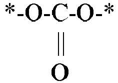 enthält, worin * eine Valenz des Polymerrückgrats kennzeichnet.

Der Begriff Polycarbonat sowie Polycarbonat-Verbindung im Sinne der vorliegenden Erfindung umfasst Verbindungen, die Homopolycarbonate, Copolycarbonate und/oder Polyestercarbonate sein können; die Polycarbonate können in bekannter Weise linear oder verzweigt sein. Erfindungsgemäß können auch Mischungen von Polycarbonaten verwendet werden.

Als geeignete Polycarbonat-Verbindung des Polycarbonat-Materials sowie geeignetes Polycarbonat eignen sich ebenso thermoplastische Polycarbonate einschließlich der thermoplastischen, aromatischen Polyestercarbonate. Diese haben bevorzugt mittlere Molekulargewichte M_{w} (ermittelt durch Messung der relativen Lösungsviskosität bei 25°C in CH₂Cl₂ und einer Konzentration von 0,5 g pro 100 ml CH₂Cl₂) von 18.000 g/mol bis 36.000 g/mol, vorzugsweise von 23.000 g/mol bis 31.000 g/mol, insbesondere von 24.000 g/mol bis 31.000 g/mol.

Ein Teil, bis zu 80 Mol-%, vorzugsweise von 20 Mol-% bis zu 50 Mol-%, der Carbonat-Gruppen in den erfindungsgemäß eingesetzten Polycarbonat-Verbindungen sowie hergestellten Polycarbonaten können durch aromatische Dicarbonsäureester-Gruppen ersetzt sein. Derartige Polycarbonate sowie Polycarbonat-Verbindungen, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polyacarbonate, bzw. der Polycarbonat-Verbindungen des Polycarbonat-Materials, erfolgt in bekannter Weise aus mindestens einem Diphenol (Diphenol wird nachfolgend auch als Dihydroxyarylverbindung bezeichnet), Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Sowohl für die Herstellung von Polycarbonat-Verbindungen des Polycarbonat-Materials als auch für die Herstellung von Polycarbonat nach dem erfindungsgemäßen Verfahren geeignete Dihydroxyarylverbindungen sind solche der Formel (1)

HO-Z-OH (1),

in welcher
Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 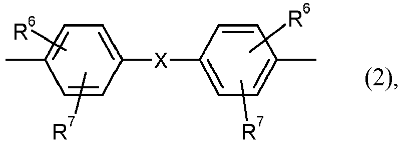 in der
R⁶ und R⁷ unabhängig voneinander für H, C₁- bis C₁₈-Alkyl-, C₁- bis Cis-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
X für eine Einfachbindung, -SO₂-, -CO-, -O-, -S-, C₁- bis C₆-Alkylen, C₂- bis Cs-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (2a)

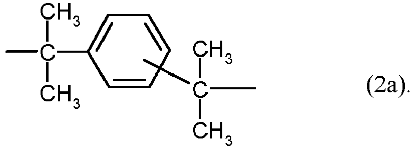

Beispiele für Diphenole (bzw. Dihydroxyarylverbindungen) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die erfindungsgemäße Herstellung des Polycarbonates sowie für die Herstellung der Polycarbonat-Verbindung für das bevorzugt verwertete Polycarbonat-Material, sind geeignete Diphenole beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan (Bisphenol A (BPA)), 2,4-Bis-(4-hydroxyphenyl)-2-methylbutan, 1,3-Bis-[2-(4-hydroxyphenyl)-2-propyl]-benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol, 1,1-Bis-(4-hydroxyphenyl)-cyclohexan und 1,1-Bis-(4-hydroxyphenyl)-3,3,5-trimethylcyclohexan (Bisphenol TMC (BPTMC)), sowie die Diphenole der Formeln (III) bis (V) 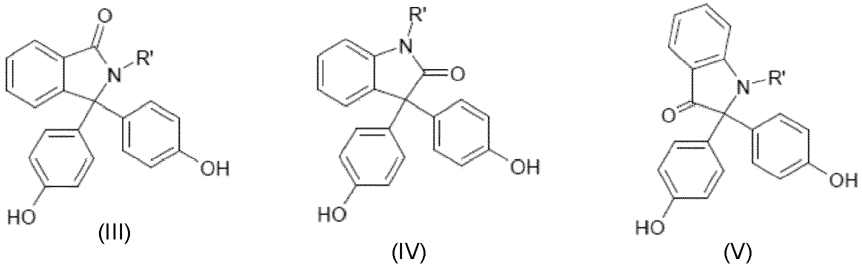 in denen R' jeweils für C₁-C₄-Alkyl, Aralkyl oder Aryl, bevorzugt für Methyl oder Phenyl steht.

Besonders bevorzugte Diphenole sind 4,4'-Dihydroxydiphenyl, 1,1-Bis-(4-Hydroxyphenyl)-phenylethan, 2,2-Bis-(4-hydroxyphenyl)-propan (Bisphenol A (BPA)), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC (BPTMC)) und die Dihydroxyverbindungen der Formeln (III), (IV) und (V), in denen R' jeweils für C₁-C₄-Alkyl, Aralkyl oder Aryl, bevorzugt für Methyl oder Phenyl steht.

Diese und weitere geeignete Diphenole sind z.B. in US 2 999 835 A, US 3 148 172 A, US 2 991 273 A, US 3 271 367 A, US 4 982 014 A und US 2 999 846 A, in den deutschen Offenlegungsschriften DE 1 570 703 A1, DE 2 063 050 A1, DE 2 036 052 A1, DE 2 211 956 A1 und DE 3 832 396 A1, der französischen Patentschrift FR 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr verschiedene Diphenole eingesetzt. Das verwendete Diphenol oder die verwendeten mehreren verschiedenen Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

In der gleichen Weise werden eventuell zu verwendende Verzweiger oder Verzweigermischungen der Synthese zugesetzt. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen, wobei die Verzweiger mit den Diphenolen vorgelegt werden.

Alle diese Maßnahmen zur Herstellung eines Polycarbonats bzw. einer Polycarbonat-Verbindung, sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Gemäß einem aus EP 0 304 691 A2 bekannten kontinuierlichen Phasengrenzflächenverfahren zur Herstellung von Polycarbonaten wird eine wässrige Phase aus Diphenolen und der gerade notwendigen Menge Alkalihydroxid mit einer Phosgen enthaltenen organischen Phase in einem Rohr unter Verwendung eines statischen Mischers zusammengeführt. Der Phosgenüberschuss ist mit 20 bis 100 Mol-% sehr hoch und die Verweilzeit im Reaktionsrohr für den ersten Reaktionsschritt liegt bei 10 bis 75 s. Mit diesem Verfahren können lediglich Prepolymere mit einem Molekulargewicht von 4000 bis 12000 g/mol hergestellt werden. Anschliessend erfolgt zwingend eine weitere Aufkondensierung unter Verwendung mindestens eines Katalysators, um zum gewünschten Molekulargewicht zu kommen. Geeignete Katalysatoren sind tertiäre Amine und Oniumsalzen. Bevorzugt werden Tributylamin, Triethylamin und N-Ethylpiperidin verwendet.

Der eingesetzte Amin-Katalysator kann offenkettig oder zyklisch sein, besonders bevorzugt sind Triethylamin und N-Ethylpiperidin. Der Katalysator wird vorzugsweise als 1 bis 55 Gew.%-ige Lösung eingesetzt.

Unter Oniumsalzen werden hier Verbindungen wie NR₄X verstanden, wobei R ein Alkyl und/oder Arylrest und/oder ein H sein kann und X ein Anion ist, beispielsweise ein Chlorid-Ion, ein Hydroxid-Ion oder ein Phenolat-Ion.

Das ausreagierte, höchstens noch Spuren an (< 2 ppm) Chlorkohlensäurearylestern enthaltende mindestens zweiphasige Reaktionsgemisch lässt man zur Phasentrennung absitzen. Die wässrige alkalische Phase (Reaktionsabwasser) wird abgetrennt und die organische Phase mit verdünnter Salzsäure und Wasser extrahiert. Die vereinigten Wasserphasen werden der Abwasseraufarbeitung zugeführt, wo Lösungsmittel- und Katalysatoranteile durch Strippen oder Extraktion abgetrennt und rückgeführt werden. Anschließend werden nach der Einstellung eines bestimmten pH-Wertes von z.B. 6 bis 8, z.B. durch Salzsäurezugabe, die gegebenenfalls noch verbleibenden organischen Verunreinigungen wie z.B. Monophenol und/oder nicht umgesetztes Diphenol bzw. nicht umgesetzte Diphenole durch Behandlung mit Aktivkohle entfernt und die Wasserphase der Chloralkalielektrolyse zugeführt.

In einer anderen Variante der Aufarbeitung wird das Reaktionsabwasser nicht mit den Waschphasen vereinigt, aber nach Strippen oder Extraktion zur Abtrennung von Lösungsmitteln und Katalysatorresten, auf einem bestimmten pH-Wert von z.B. 6 bis 8, z.B. durch Salzsäurezugabe eingestellt und nach Abtrennung der noch verbleibenden organischen Verunreinigungen wie z.B. Monophenol und/oder nicht umgesetztes Diphenol oder nicht umgesetzte Diphenole durch Behandlung mit Aktivkohle der Chloralkalielektrolyse zugeführt.

Die Waschphasen können nach Entfernung der Lösungsmittel- und Katalysatoranteile durch Strippen oder Extraktion gegebenenfalls wieder der Synthese zugeführt werden.

Das Carbonylhalogenid, insbesondere Phosgen, kann flüssig, gasförmig oder gelöst in einem organischem Lösungsmittel eingesetzt werden.

Die Herstellung von Phosgen aus Kohlenmonoxid und Chlor ist bekannt, beispielsweise aus EP 0 881 986 A1, EP 1 640 341 A2, DE 332 72 74 A1, GB 583 477 A, WO 97/30932 A1, WO 96/16898 A1, oder US 6,713,035 B1.

Nach Eintrag des Phosgens kann es vorteilhaft sein, eine gewisse Zeit die organische Phase und die wässrige Phase zu durchmischen, bevor gegebenenfalls Verzweiger, sofern dieser nicht gemeinsam mit dem Bisphenolat dosiert wird, Kettenabbrecher und Katalysator zugegeben werden. Eine derartige Nachreaktionszeit kann nach jeder Dosierung von Vorteil sein. Diese Nachrührzeiten liegen, insofern sie eingelegt werden, zwischen 10 Sekunden und 60 Minuten, bevorzugt zwischen 30 sec. und 40 Minuten, besonders bevorzugt zwischen 1 und 15 min.

Die organische, das Polycarbonat enthaltende Phase muss nun von allen Kontaminationen alkalischer, ionischer oder katalytischer Art gereinigt werden.

Die organische Phase enthält auch nach einem oder mehreren Absetzvorgängen, gegebenenfalls unterstützt durch Durchläufe durch Absetzkessel, Rührkessel, Coalescer oder Separatoren bzw. Kombinationen aus diesen Maßnahmen - wobei gegebenenfalls Wasser in jedem oder einigen Trennschritten unter Umständen unter Verwendung von aktiven oder passiven Mischorganen zudosiert werden kann - noch Anteile der wässrigen alkalischen Phase in feinen Tröpfchen sowie den Katalysator, in der Regel ein tertiäres Amin.

Nach dieser groben Abtrennung der alkalischen, wässrigen Phase wird die organische Phase ein oder mehrmals mit verdünnten Säuren, Mineral-, Carbon- Hydroxycarbon-und/oder Sulfonsäuren gewaschen. Bevorzugt sind wässrige Mineralsäuren insbesondere Salzsäure, phosphorige Säure und Phosphorsäure oder Mischungen dieser Säuren. Die Konzentration dieser Säuren sollte im Bereich 0,001 bis 50 Gew. %, bevorzugt 0,01 bis 5 Gew. % liegen.

Weiterhin wird die organische Phase mit entsalztem oder destilliertem Wasser wiederholt gewaschen. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen aus diesen Maßnahmen, wobei das Waschwasser zwischen den Waschschritten gegebenenfalls unter Verwendung von aktiven oder passiven Mischorganen zudosiert werden kann.

Zwischen diesen Waschschritten oder auch nach der Wäsche können gegebenenfalls Säuren, vorzugsweise gelöst im Lösungsmittel welches der Polycarbonatlösung zugrunde liegt, zugegeben werden. Bevorzugt werden hier Chlorwasserstoffgas und Phosphorsäure oder phosphorige Säure verwendet, die gegebenenfalls auch als Mischungen eingesetzt werden können.

Die so erhaltene gereinigte Polycarbonatlösung sollte nach dem letzten Trennvorgang nicht mehr als 5 Gew. %, bevorzugt weniger als 1 Gew. %, ganz besonders bevorzugt weniger als 0,5 Gew. % Wasser enthalten.

Zur Isolierung des Polycarbonats wird in einem ersten Schritt das leichtsiedende Lösungsmittel, beispielsweise Methylenchlorid, gegen ein hochsiedendes Lösungsmittel, beispielsweise Chlorbenzol ausgetauscht. Dies geschieht mittels einer Austauschkolonnne.

Die Isolierung des Polycarbonats aus der Lösung mit dem hochsiedenden Lösungsmittel, beispielsweise Chlorbenzol, kann durch Verdampfen des Lösungsmittels mittels Temperatur, Vakuum oder eines erhitzten Schleppgases erfolgen.

Geschieht die Konzentrierung der Polycarbonatlösung und eventuell auch die Isolierung des Polycarbonats durch Abdestillation des Lösungsmittels, gegebenenfalls durch Überhitzung und Entspannung, so spricht man von einem `Flash-Verfahren" siehe auch "Thermische Trennverfahren", VCH Verlagsanstalt 1988, S. 114; wird statt dessen ein geheiztes Trägergas zusammen mit der einzudampfenden Lösung versprüht, so spricht man von einer `Sprühverdampfung/Sprühtrocknung" beispielhaft beschrieben in Vauck, "Grundoperationen chemischer Verfahrenstechnik", Deutscher Verlag für Grundstoffindustrie 2000, 11.Auflage, S. 690. Alle diese Verfahren sind in der Patentliteratur und in Lehrbüchern beschrieben und dem Fachmann geläufig.

Bei der Entfernung des Lösungsmittels durch Temperatur (Abdestillieren) oder dem technisch effektiveren Flash-Verfahren erhält man hochkonzentrierte Polycarbonatschmelzen. Bei dem bekannten Flashverfahren wird eine Polycarbonatlösung wiederholt unter leichtem Überdruck auf Temperaturen oberhalb des Siedepunktes unter Normaldruck erhitzt und diese, bezüglich des Normaldruckes, überhitzten Lösungen anschliessend in ein Gefäß mit niedrigerem Druck, z.B.

Normaldruck, entspannt. Es kann dabei von Vorteil sein, die Aufkonzentrationsstufen, oder anders ausgedrückt die Temperaturstufen der Überhitzung nicht zu groß werden zu lassen sondern lieber ein zwei- bis vierstufiges Verfahren zu wählen.

Aus der so erhaltenen hochkonzentrierten Polycarbonatschmelze können die Reste des Lösungsmittels entweder direkt aus der Schmelze mit Ausdampfextrudern (BE-A 866 991, EP-A 0 411 510, US-A 4 980 105, DE-A 33 32 065), Dünnschichtverdampfern (EP-A-0 267 025), Fallfilmverdampfern, Strangverdampfern oder durch Friktionskompaktierung (EP-A-0 460 450), gegebenenfalls auch unter Zusatz eines Schleppmittels, wie Stickstoff oder Kohlendioxid oder unter Verwendung von Vakuum (EP-A 0 039 96, EP-A 0 256 003, US-A 4 423 207), entfernt werden, alternativ auch durch anschließende Kristallisation (DE-A 34 29 960) und Ausheizen der Reste des Lösungsmittels in der festen Phase ( US-A 3 986 269, DE-A 20 53 876).

Granulate erhält man, wenn möglich, durch direktes Abspinnen der Schmelze und anschließender Granulierung oder aber durch Verwendung von Austragsextrudern von denen in Luft oder unter Flüssigkeit, meist Wasser, abgesponnen wird. Werden Extruder benutzt, so kann man der Schmelze, vor diesem Extruder, gegebenenfalls unter Einsatz von statischen Mischern oder durch Seitenextruder im Extruder, Additive zusetzen.

Der Zusatz von Additiven zu Polycarbonat, bzw. zu den Polycarbonat-Verbindungen dient der Verlängerung der Nutzungsdauer oder der Farbe (Stabilisatoren), der Vereinfachung der Verarbeitung (z.B. Entformer, Fließhilfsmittel, Antistatika) oder der Anpassung der Eigenschaften des resultierenden Polycarbonat-Materials an bestimmte Belastungen (Schlagzähmodifikatoren, wie Kautschuke; Flammschutzmittel, Farbmittel, Glasfasern).

Diese Additive können einzeln oder in beliebigen Mischungen oder mehreren verschiedenen Mischungen der Polycarbonatschmelze zugesetzt werden und zwar direkt bei der Isolierung des Polycarbonats bzw. der Polycarbonat-Verbindung oder aber nach Aufschmelzung von Granulat in einem sogenannten Compoundierungsschritt unter Erhalt von Polycarbonat-Material. Dabei können die Additive beziehungsweise deren Mischungen als Feststoff, also als Pulver, oder als Schmelze der Polycarbonatschmelze zugesetzt werden. Eine andere Art der Dosierung ist die Verwendung von Masterbatches oder Mischungen von Masterbatches der Additive oder Additivmischungen.

Geeignete Additive sind beispielsweise beschrieben in "Additives for Plastics Handbook, John Murphy, Elsevier, Oxford 1999", im "Plastics Additives Handbook, Hans Zweifel, Hanser, München 2001".

Geeignete Antioxidantien bzw. Thermostabilisatoren sind beispielsweise:
Alkylierte Monophenole,
Alkylthiomethylphenole,
Hydrochinone und alkylierte Hydrochinone,
Tocopherole,
Hydroxylierte Thiodiphenylether,
Alkylidenbisphenole,
O-, N- und S-Benzylverbindungen,
Hydroxybenzylierte Malonate,
Aromatische Hydroxybenzylverbindungen,
Triazinverbindungen,
Acylaminophenole,
Ester der β-(3,5-Di-tert-butyl-4-hydroxyphenyl)propionsäure
Ester der β-(5-tert-Butyl-4-hydroxy-3-methylphenyl)propionsäure,
Ester der β-(3,5-Dicyclohexyl-4-hydroxyphenyl)propionsäure,
Ester der 3,5-Di-tert-butyl-4-hydroxyphenylessigsäure,
Amide der β-(3,5-Di-tert-butyl-4-hydroxyphenyl)propionsäure,
Geeignete Thiosynergisten,
Sekundäre Antioxidantien, Phosphite und Phosphonite,
Benzofuranone und Indolinone.

Bevorzugt sind organische Phosphite, Phosphonate und Phosphane , meist solche bei denen die organischen Reste völlig oder teilweise aus gegebenenfalls substituierten aromatischen Resten bestehen.

Als Komplexierungsmittel für Schwermetalle und zur Neutralisation von Alkalispuren sind o/m Phosphorsäuren, ganz oder teilweise veresterte Phosphate oder Phosphite geeignet,
Als Lichtschutzmittel (UV-Absorber) sind beispielsweise geeignet:
2-(2'-Hydroxyphenyl)benzotriazole,
2-Hydroxybenzophenone,
Ester von substituierten und unsubstituierten Benzoesäuren,
Acrylate,
Sterisch gehinderte Amine,
Oxamide,
2-(2-Hydroxyphenyl)-1,3,5-triazine,
bevorzugt sind substituierte Benztriazole.

Polypropylenglykole allein oder in Kombination mit z.B. Sulfonen oder Sulfonamiden als Stabilisatoren können gegen die Schädigung durch Gamma-Strahlen verwendet werden.

Diese und andere Stabilisatoren können einzeln oder in Kombinationen verwendet werden und in den genannten Formen dem Polycarbonat zugesetzt werden.

Außerdem können Verarbeitungshilfsmittel wie Entformungsmittel, meist Derivate langkettiger Fettsäuren, zugesetzt werden. Bevorzugt sind z.B. Pentaerythrittetrastearat und Glycerinmonostearat. Sie werden allein oder im Gemisch vorzugsweise in einer Menge von 0,02 bis 1 Gew.-%, bezogen auf die Masse der Zusammensetzung eingesetzt.

Geeignete flammhemmende Additive sind Phosphatester, d.h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

Außerdem können Farbmittel, wie organische Farbstoffe oder Pigmente oder anorganische Pigmente, IR-Absorber, einzeln, im Gemisch oder auch in Kombination mit Stabilisatoren, Glasfasern, Glas(hohl)kugeln, anorganischen Füllstoffen zugesetzt werden.

Aus vorgenanntem Polycarbonat, bzw. aus vorgenannten Polycarbonat-Verbindungen lässt sich durch weiteren Zusatz der zuvor beschriebenen Additive Polycarbonat-Material bereitstellen, das für die Produktion diverser Handelsprodukte zum Einsatz kommen kann. Nach dem Ablauf der Nutzungsphase der Polycarbonat-Material enthaltenen Produkte werden diese üblicherweise entsorgt, d.h. auf Mülldeponien gelagert oder in Müllverbrennungsanlagen verbrannt. Eine stoffliche Nutzung durch vermalen und wieder aufschmelzen kann nur Teilweise durchgeführt werden, d.h. dass es bisher nicht immer gelang, aus den Polycarbonat-Materialien die eingesetzten Polycarbonate in wirtschaftlicher Reinheit wieder zu gewinnen.

Für die RWGS-Synthese muss gemäß vorliegender Erfindung eine Bereitstellung eines gereinigten CO₂ Gasstroms erfolgen, der von dem in der Abtrennung abgetrennten, nicht in der RWGS-Reaktion umgesetztem Kohlendioxid verschieden ist, und der Verfahrensprodukt einer Methode, enthaltend zumindest folgende Schritte, ist:
Bereitstellung eines CO₂ Gasstroms,
Reinigung des CO₂ Gasstroms von Nebenbestandteilen (insbesondere von Stickoxiden, Schwefelverbindungen, Phosphorverbindungen, Staub, Wasser, Sauerstoff und HCl) wahlweise mittels Adsorption, Gaswäsche oder katalytischer Behandlung unter Erhalt eines Gasstroms gereinigten Kohlendioxids.

Bei dieser Bereitstellung des gereinigten CO₂ Gasstroms ist es demnach ausreichend, wenn der gereinigte CO₂ Gasstrom ein Verfahrensprodukt der vorgenannten Methode ist. Dies bedeutet, dass es bei Durchführung des erfindungsgemäßen Verfahrens für die Ausführung des Schrittes der Bereitstellung eines gereinigten CO₂ Gasstroms bereits ausreicht, den besagten gereinigten CO₂ Gasstrom lediglich im Rahmen einer Belieferung als Rohstoff aus einem Lagerbehälter oder aus einer Zuleitung zu entnehmen. In diesem Falle führt der Polycarbonat-Produzent als Ausführender des erfindungsgemäßen Verfahrens die vorgenannte Methode zur Herstellung des besagten CO₂ nicht selbst aus, sondern er sorgt nur dafür, dass das bereitgestellte CO₂ durch den Lieferanten nach dieser besagten Methode hergestellt wurde.

Ebenso ist es erfindungsgemäß möglich, wenn zur Bereitstellung des gereinigten CO₂ Gasstroms vorgenannte Schritte der Herstellmethode des gereinigten CO₂ Gasstroms als integrale Schritte eines erfindungsgemäßen Verfahrens zur Herstellung von Polycarbonat durch den Polycarbonat-Produzenten ausgeführt werden und der dabei erhaltene, gereinigte CO₂ Gasstrom der RWGS Reaktionszone zur Umsetzung direkt zugeführt wird.

Diese Möglichkeiten der Bereitstellung, i.e. Belieferung oder eigene Herstellung durch den Polycarbonat-Produzenten, gelten jeweils auch für die nachfolgend genannten Ausführungsformen der Bereitstellung des gereinigten CO₂ Gasstroms.

Eine bevorzugte Ausführungsform des erfindungsgemäßen Verfahrens ist dadurch gekennzeichnet, dass für die RWGS-Synthese Kohlendioxid verwendet wird, das aus der Verwertung von Polycarbonat-Material Abfall durch Verbrennung und/oder durch Pyrolyse als Kohlendioxid bereitgestellt und in der Reinigung gereinigt wurde. Dabei ist es wiederum bevorzugt, wenn bei der Verbrennung Sauerstoffgas genutzt wird, das aus der Wasserelektrolyse erhalten wird.

Der Polycarbonat-Material Abfall kann durch Nutzung von Polycarbonat-Material im Markt entstanden sein, wobei das Polycarbonat-Material unter Einsatz von Polycarbonat als Polycarbonat-Verbindung hergestellt wurde, welches nach dem erfindungsgemäßen Verfahren als Polycarbonat bereitgestellt wurde. Bei Wiederverwertung eines solchen Polycarbonat-Material Abfalles in der erfindungsgemäßen RWGS-Synthese spricht man von einem sogenannten "closed loop" Verfahren. Allerdings ist es selbstverständlich auch möglich in der RWGS-Synthese der vorliegenden Erfindung CO₂ aus der Verbrennung von Polycarbonat-Material Abfall zu verwerten, der Polycarbonat-Verbindungen enthält, die nicht als Polycarbonate gemäß erfindungsgemäßem Verfahren hergestellt wurden.

Ganz besonders bevorzugt ist ein Verfahren, bei dem für die RWGS-Synthese Kohlendioxid verwendet wird, das aus der Verwertung von Polycarbonat-Material Abfall durch Verbrennung in Gegenwart von Gas mit einem Sauerstoffgas-Gehalt (O₂) entsteht, wobei besagtes Gas einen Sauerstoffgas-Gehalt (O₂) von mindestens 30 Vol.%, bevorzugt von mindestens 50 Vol.%, besonders bevorzugt von mindestens 95 Vol.%, ganz besonders bevorzugt von mindestens 99 Vol.%, am bevorzugtesten von mindestens 99,5 Vol.%, aufweist.

Das dabei zur Verbrennung eingesetzte Sauerstoffgas kann wiederum bevorzugt aus einer Wasserelektrolyse erhalten werden.

Die Verwertung des Polycarbonat-Material Abfalls erfolgt im Rahmen der Bereitstellung des CO₂ Gasstromes beispielsweise durch Pyrolyse des besagten Polycarbonat-Material Abfalles bei erhöhter Temperatur, gegebenenfalls in Gegenwart von Katalysator, unter Erhalt von Kohlendioxid, gegebenenfalls Kohlenmonoxid, gegebenenfalls Wasserstoff, gegebenenfalls einem Gemisch von aliphatischen und aromatischen niedermolekularen Kohlenwasserstoffen und stickstoffhaltigen Kohlenwasserstoffen und gegebenenfalls einem Rückstand von höher molekularen Kohlenwasserstoffen mit mehr als acht Kohlenstoffatomen. Das in der Pyrolyse erhaltene Gemisch wird bevorzugt anschließend einer Raffination zugeführt unter Erhalt eines Gasgemisches von Kohlendioxid, Kohlenmonoxid, Wasserstoffgas und weiteren bei Normalbedingungen gasförmigen niedermolekularen Kohlenwasserstoffverbindungen.

Die Verbrennung des in der Pyrolyse erhaltenen Rückstands und gegebenenfalls von weiterem Polycarbonat-Material Abfall kann insbesondere mit sauerstoffhaltigem Gas, insbesondere mit reinem Sauerstoff, unter Erhalt von Kohlendioxid enthaltendem Gas erfolgen.

In einer bevorzugten Ausführung des neuen Verfahrens wird für die RWGS-Synthese Kohlendioxid verwendet, das aus der Verbrennung von Polycarbonat-Material Abfall unter Verwendung von Sauerstoff entsteht, der aus einer Wasserelektrolyse bereitgestellt wird.

In einer weiteren bevorzugten Ausführung des neuen Verfahrens wird eine Wasserelektrolyse und/oder die Chloralkali-Elektrolyse unter Verwendung von aus regenerativer Energie erzeugtem elektrischem Strom durchgeführt wird, insbesondere aus regenerativer Energie in Form von Windkraft, Sonnenenergie oder Wasserkraft.

In einer anderen bevorzugten Ausführungsform des neuen Verfahrens werden eine Wasserelektrolyse und/oder die Chloralkali-Elektrolyse unter Verwendung von elektrischem Strom aus rückgekoppelter Energie durchgeführt, die bei der Verbrennung von Polycarbonat-Material Abfall und/oder der Durchführung der RWGS Reaktion erhalten wird.

Eine weitere alternative Ausführungsform des neuen Verfahrens ist dadurch gekennzeichnet, dass der RWGS Reaktion (6) Wärmeenergie zugeführt wird, die mittels aus regenerativer Energie erzeugten elektrischen Stroms (28) hergestellt wird, insbesondere elektrischem Strom wahlweise erhalten durch Nutzung von Windkraft, Sonnenenergie oder Wasserkraft.

In einer weiteren alternativen Ausführung des neuen Verfahrens wird die Zuführung von Wärmeenergie zur RWGS Reaktion unter Einsatz von rückgekoppelter Energie durchgeführt, die aus der Verbrennung von Polycarbonat-Material Abfall erhalten wird. Unter "rückgekoppelter Energie" versteht der Fachmann Energie, insbesondere Wärmeenergie, die aus einem Verfahrensschritt des erfindungsgemäßen Verfahrens entnommen (gegebenenfalls in einer anderen Energieform, z.B. elektrischen Strom, umgewandelt) und in einen anderen Verfahrensschritt des erfindungsgemäßen Verfahrens wieder eingebracht wird.

In einer bevorzugten Variante des neuen Verfahrens erfolgt die Heizung der RWGS Reaktion mittels Verbrennung von Kohlenwasserstoffen aus regenerativer Kohlenwasserstofferzeugung, insbesondere mittels Verbrennung von Biomethan. Unter Biomethan wird hier Methan verstanden, das aus dem durch Vergärung von Biomasse erhaltenen Biogas gewonnen wird. Eine weitere besonders bevorzugte Variante des neuen Verfahrens ist dadurch gekennzeichnet, dass das Polycarbonat Material nach seiner Nutzung als Polycarbonat-Material Abfall rezykliert wird und der Polycarbonat-Material Abfall zu Kohlendioxid verbrannt und das Kohlendioxid als Einsatzmaterial in der Reinigung eingesetzt wird.

Bevorzugt wird der Sauerstoff für die Verbrennung aus einer Wasserelektrolyse erhalten.

Durch bevorzugten Einsatz von Strom aus regenerativer Energie (bevorzugt aus Windkraft, aus Wasserkraft oder aus Sonnenenergie) wird die CO₂-Emission bei dem Gesamtverfahren weiter herabgesetzt.

Der Stoffkreislauf wird in einer besonders bevorzugten Ausführung des erfindungsgemäßen Verfahren weiter dadurch geschlossen, dass für die Bereitstellung des CO₂ Gasstroms Polycarbonat-Material nach seiner Nutzung als Polycarbonat-Material Abfall rezykliert wird und der Polycarbonat-Material Abfall zu Kohlendioxid verbrannt und das Kohlendioxid als Einsatzmaterial in der Reinigung eingesetzt wird.

Beim vorgenannten Recycling von Polycarbonat-Material nach dem Ende der Nutzungsdauer werden übliche Trennverfahren zur Abtrennung von Verbundstoffen im Abfall angewandt. So wird das Polycarbonat-Material automatisiert oder händisch grob abgetrennt, dann mechanisch zerkleinert und ggf. weiter getrennt. Das erhaltene Polycarbonat-Material dient als Rohstoff Polycarbonat-Material Abfall für die Verbrennung oder die Pyrolyse.

Im Falle der Verbrennung wird der Polycarbonat-Material Abfall beispielsweise mit reinem Sauerstoff O₂, welches als Produkt der Wasserelektrolyse an der Anode entwickelt wird, umgesetzt. Die bei der Verbrennung anfallende Reaktionswärme kann als rückgekoppelte Energie zur Herstellung von Dampf und/oder von elektrischem Strom eingesetzt werden. Besonders kann die Wärme zum Betrieb einer Pyrolyse eingesetzt werden und der erzeugte elektrische Strom in der Elektrolyse, insbesondere der Chloralkali-Elektrolyse oder der Wasserelektrolyse. Hierdurch wird die Effizienz des neuen Gesamtverfahrens weiter verbessert.

Ebenfalls kann die bei der Verbrennung gewonnene Wärme als rückgekoppelte Energie zur Beheizung der RWGS Reaktion eingesetzt werden, wodurch die energetische Effizienz des neuen Gesamtverfahrens gegenüber dem Stand der Technik weiter verbessert wird.

Das aus der Verbrennung oder aus der Pyrolyse des Polycarbonat-Material Abfalles stammende CO₂ fällt in hochkonzentrierter Form an und wird vor der weiteren Nutzung einer Reinigung zugeführt, wodurch ein gereinigter CO₂ Gasstrom entsteht. Hierbei werden die Nebenprodukte der Verbrennung, z.B. Schwefelverbindungen wie SO₂, Stickstoffverbindungen wie NOx sowie restliche Organika als auch Staub und andere entstandene Verbindungen, die aus denen im Polycarbonat-Material vorhandenen Komponenten entstanden sind, abgetrennt.

Die Verbrennung des Polycarbonat-Material Abfalls mit reinem Sauerstoff kann z.B. gemäß dem als Oxyfuel-Verfahren bekannten Verfahren in einer Atmosphäre aus reinem Sauerstoff und CO₂ (rezirkulierendem Rauchgas) erfolgen. Das dabei entstehende Rauchgas ist nicht mit dem in der Luft enthaltenen Stickstoff verdünnt und besteht im Wesentlichen aus CO₂ und Wasserdampf. Der Wasserdampf kann mit wenig Aufwand kondensiert werden, so dass ein hochkonzentrierter CO₂-Strom (Konzentration im Idealfall nahe 100 Prozent) entsteht. Das CO₂ kann dann gereinigt und weiterverarbeitet, ggf. auch verdichtet und gelagert werden.

Weiterhin kann ein Teil der Energie, die bei der Pyrolyse oder bei der Verbrennung des Polycarbonat-Material Abfalls gewonnen wird in Dampf oder Elektrizität umgesetzt werden. Mit der gewonnenen Elektrizität kann, wie bereits zuvor erwähnt die Elektrolyse oder die Beheizung der RWGS betrieben werden, womit ein noch effizienteres Verfahren mit geringem Verbrauch an elektrischer Energie entsteht.

Die Reinigung des CO₂ aus Verbrennungsgasen kann nach aus dem Stand der Technik grundsätzlich bekannten Verfahren erfolgen. Dies wird im Folgenden beispielhaft beschrieben.

Zuerst erfolgt dabei z.B. eine Reinigung der Verbrennungsgase, deren Hauptbestandteil CO₂ ist. Der Aufbau einer Verbrennungsgasreinigung unterteilt sich in unterschiedliche Stufen. Besondere Aufgabe der Reinigung ist es, ein CO₂ ohne störende Nebenbestandteile für die nachfolgende RWGS Reaktion bereit zu stellen.

In der ersten Stufe wird Staub aus dem Verbrennungsgas entfernt. Dies kann mit Gewebefiltern oder mit einem Elektrofilter erfolgen. Danach können ggf. vorhandene saure Gas, wie Chlorwasserstoff, der sich aus im Abfall vorhandenen Chlor-Verbindungen bildet, entfernt werden. Hierbei werden z.B. Abgaswaschtürme eingesetzt. Das Verbrennungsgas wird hierbei auch abgekühlt und von weiteren Stäuben und ggf. Schwermetallen befreit. Weiterhin wird auch gebildetes Schwefeldioxid-Gas in einem Waschkreislauf abgeschieden und z.B. mit Kalkhydrat zu Gips umgesetzt. Die Entfernung von Stickstoffverbindungen aus den Verbrennungsgasen kann z.B. an katalysatorenthaltenen Zeolithen oder durch Zugabe von Harnstoff oder Ammoniak die Stickoxide wieder zu Stickstoff und Wasser umgewandelt werden. Um eine Entstehung von Ammoniumsalzen zu verhindern, die die Katalysatorporen verstopfen würden, erfolgt der Betrieb der Katalysatoren meist bei einer Temperatur von über 320 °C. Ebenso können die Stickstoffverbindungen durch Wäsche mit Salpetersäure oder eine Wäsche mit Katalysatoren entfernt werden.

Die Trocknung und weitere Reinigung des CO₂ kann durch übliche bekannte Verfahren erfolgen. Trocknung z.B. durch eine Behandlung mit konzentrierter Schwefelsäure.

In der letzten Reinigungsstufe werden Aktivkohlefilter eingesetzt, um noch im Verbrennungsgas enthaltene restliche Organika sowie letzte Reste von Metallen durch Aktivkohle zu entfernen. Hierzu kann z.B. staubförmige Aktivkohle in den Verbrennungsgasstrom bzw. Rauchgasstrom dosiert zugeführt und anschließend zusammen mit den angelagerten Schadstoffen auf den Gewebefilter wieder abgeschieden werden. Die verbrauchte Kohle wird ausgeschleust und der energetischen Verwertung zugeführt (grundsätzlich beschrieben in: https://www.ava-augsburg.de/umweit/rauchgasreinigung/).

Nach den durchgeführten Reinigungsverfahren der Verbrennungsgase steht ein CO₂ zur Verfügung, welches als Rohstoff der RWGS Reaktion eingesetzt werden kann.

Optional kann auch die CO₂ Abtrennung mittels Aminwäsche aus Gasströmen mit geringerer Konzentration an CO₂ erfolgen.

Bei der Pyrolyse ist die Zuführung von zusätzlichem Sauerstoffgas in den Reaktionsraum der Pyrolyse nicht bevorzugt. Die Pyrolyse des gebrauchten Polycarbonat Material-Abfalls kann bevorzugt wie folgt durchgeführt werden:
Die Pyrolyse des Polycarbonat Materials erfolgt bei erhöhter Temperatur, gegebenenfalls in Gegenwart von Katalysator, unter Erhalt von gegebenenfalls Kohlendioxid, gegebenenfalls Kohlenmonoxid, gegebenenfalls/ Wasserstoff, einem Gemisch von aliphatischen und aromatischen niedermolekularen Kohlenwasserstoffen und stickstoffhaltigen Kohlenwasserstoffen und einem Rückstand von höher molekularen Kohlenstoffverbindungen,
gegebenenfalls Raffination des erhaltenen Gemisches von niedermolekularen Kohlenwasserstoffen unter Erhalt von einem Gemisch von gasförmigen und flüssigen Kohlenwasserstoffen und einem Gemisch von Kohlendioxid und Kohlenmonoxid, Wasserstoff und weiteren gasförmigen Kohlenwasserstoffverbindungen, und Trennung der erhaltenen Gemische in einer Gastrennung,
Verbrennung des erhaltenen Rückstands und gegebenenfalls von weiterem Polycarbonat Materialabfall mit sauerstoffhaltigem Gas, insbesondere mit reinem Sauerstoff, unter Erhalt von Kohlendioxid enthaltendem Gas,
der wie zuvor beschrieben recycelte und zerkleinerte Polycarbonat-Material Abfall kann der Pyrolyse zugeführt werden, wobei die Pyrolyse wahlweise mit oder ohne Katalysator durchgeführt werden kann.

Die bei der Pyrolyse entstehenden Fraktionen sind gasförmig, flüssig und fest, wobei die feste Phase meist vorwiegend aus pyrolytischem Kohlenstoff besteht. Die flüssigen, langkettigen Kohlenstoff-Verbindungen, enthaltend Aromaten wie Toluol, Benzol, Xylol, werden bevorzugt einem Raffinationsprozess zugeführt.

Weiterhin kann die Pyrolyse wahlweise insbesondere so betrieben werden, dass größere Mengen an Kohlenmonoxid und ggf. Wasserstoff erzeugt werden. Diese Gase können gemeinsam mit den kurzkettigen Kohlenwasserstoff-Verbindungen z.B. in der Raffination abgetrennt oder auch separat abgetrennt werden und dann einer Kohlenmonoxid-Wasserstoff-Trennung zugeführt und verwendet werden.

Die bei der Pyrolyse anfallenden festen Stoffe, bestehen meist aus Kohlenstoff. Diese feste Phase kann mit reinem Sauerstoff aus der Wasserelektrolyse umgesetzt werden. Hierbei entsteht ebenfalls ein hoch konzentrierter Stoffstrom an CO₂, welcher einer Reinigung zugeführt wird.

Eine andere Möglichkeit zur Herstellung von hochreinem CO₂ ist die Absorption des CO₂ in Alkalilauge, zum Beispiel Kalilauge. Hierbei bildet sich Kaliumhydrogencarbonat, welches anschließend wieder zu CO₂ und Kalilauge thermisch zersetzt werden kann. Hierbei kann erzeugte Wärme aus der Pyrolyse oder Verbrennung eingesetzt werden.

Das gereinigte CO₂ wird als gereinigter CO₂ Gasstrom bereitgestellt und der RWGS Reaktion zugeführt.

Das Produktgasgemisch der RWGS Reaktion wird einer Abtrennung von im Produktgasgemisch enthaltenem, gasförmigem Wasser unterworfen. Das Produktgasgemisch, das der RWGS Reaktion entnommen wird, wird dafür bevorzugt abgekühlt. Dabei wird das Reaktionswasser abgetrennt. Das abgetrennte Wasser kann als Rohstoff einer Wasserelektrolyse oder der Chloralkali-Elektrolyse wieder zugeführt werden. Nach der Wasser-Abtrennung wird das Gas der CO₂-Abtrennung zugeführt.

Die CO₂ Abtrennung erfolgt z.B. durch eine Aminwäsche, in der das CO₂ entfernt und das Restgas aus CO und H₂ einer H₂-CO Gastrenneinheit zugeführt wird. Das erhaltene CO wird dann der Phosgensynthese zugeführt und hier mit Cl₂ zu Phosgen umgesetzt. Das erzeugte Phosgen wird der Polycarbonatherstellung zugeführt. In der Polycarbonat-Herstellung wird das Phosgen mit mindestens einem Diol zu einer Polycarbonat-Verbindung und optional Kochsalz umgesetzt.

Bevorzugt ist daher eine Ausführung des neuen Verfahrens, bei der mindestens Teilströme des Kohlenmonoxids und/oder des Wasserstoffs aus der H₂-CO Trennung einer RWGS Reaktion zugeführt werden.

Das neue Verfahren kann auch bevorzugt so betrieben werden, dass ein Teil des Polycarbonat Material Abfalls anstelle der Pyrolyse direkt der Verbrennung zugeführt wird.

Fällt bei der Polycarbonat-Herstellung Alkalichlorid, insbesondere Natriumchlorid, an, kann dieses einer Chloralkali Elektrolyse zugeführt werden. Dazu enthält das erfindungsgemäße Verfahrens in einer bevorzugten Ausführungsform die Abtrennung und Reinigung der in der Polycarbonat-Herstellung gebildeten Natriumchloridlösung und anschließende Zuführung des besagten Natriumchlorides zu einer elektrochemischen Umsetzung des in wässriger Lösung befindlichen Natriumchlorids zu Chlor und gegebenenfalls Natronlauge. Das nach Abtrennung und Reinigung der in der Polycarbonat-Herstellung gebildeten Natriumchloridlösung erhaltene Natriumchlorid wird auch als aufbereitetes Natriumchlorid bezeichnet. Das in diesem bevorzugten Schritt gebildete Chlor wird wiederum bevorzugt der Phosgensynthese zugeführt. Die gebildete Natronlauge kann beispielsweise dem Schritt der Umsetzung von zumindest Phosgen mit mindestens einem Diol zu mindestens einem Polycarbonat zugeführt werden. Als besagte elektrochemische Umsetzung kommt unter anderem insbesondere die bereits im Rahmen des erfindungsgemäßen Verfahrens durchgeführte Chloralkali-Elektrolyse in Frage.

Im Rahmen einer besonders bevorzugten Ausführungsform wird die besagte elektrochemische Umsetzung mittels aus regenerativer Energie erzeugten elektrischen Stroms durchgeführt, insbesondere unter Einsatz von elektrischem Strom wahlweise erhalten durch Nutzung von Windkraft, Sonnenenergie oder Wasserkraft.

Für die Bereitstellung von Chlor und Wasserstoff wird im Sinne des erfindungsgemäßen Verfahrens eine Chloralkalielektrolyse durchgeführt.

Das Verfahren der Chloraalkali-Elektrolyse wird im Folgenden näher beschrieben. Die nachstehende Beschreibung ist in Bezug auf die Elektrolyse von Natriumchlorid beispielhaft anzusehen, da im Verfahren wie bereits oben ausgeführt wurde z.B. grundsätzlich jedes Alkalichlorid zum Einsatz kommen kann (insbesondere Li-, Na-, KCl), die Verwendung von Natriumchlorid bzw. Natronlauge in den vorgehenden Stufen aber die bevorzugte Ausführung des Verfahrens ist.

Üblicherweise werden z.B. zur Elektrolyse von Natriumchlorid-haltigen Lösungen Membranelektrolyseverfahren eingesetzt. Hierbei wird z.B. eine zweigeteilte Elektrolysezelle eingesetzt, die zumindest einen Anodenraum mit einer Anode und einen Kathodenraum mit einer Kathode umfasst. Anoden- und Kathodenraum werden von einer Ionenaustauschermembran getrennt. In den Anodenraum wird eine Natriumchlorid-haltige Lösung mit einer Natriumchlorid-Konzentration von üblicherweise mehr als 300 g/l eingeführt. An der Anode wird das Chlorid-Ion zu Chlor oxidiert, dass mit der abgereicherten Natriumchlorid-haltigen Lösung (ca. 200 g/l) aus der Zelle geführt wird. Die Natrium-Ionen wandern unter Einfluss des elektrischen Feldes durch die Ionenaustauschermembran in den Kathodenraum. Bei dieser Wanderung nimmt jedes mol Natrium je nach Membran zwischen 3,5 und 4,5 mol Wasser mit. Dies führt dazu, dass der Anolyt an Wasser verarmt. Im Gegensatz zum Anolyten wird auf der Kathodenseite durch die Elektrolyse von Wasser zu Hydroxid-Ionen und Wasserstoff Wasser verbraucht. Das mit den Natrium-Ionen in den Katholyten gelangende Wasser reicht aus, um die Natronlauge-Konzentration im Auslauf auf 31-32 Gew.-% zu halten, dies bei einer Einlaufkonzentration von 30% und einer Stromdichte von 4 kA/m². Im Kathodenraum wird Wasser elektrochemisch reduziert, wobei Hydroxid-Ionen und Wasserstoff entstehen.

Bei der Natriumchlorid-Elektrolyse wird über die Natriumchlorid-haltige Lösung zusätzliches Wasser in den Anolyten eingebracht, jedoch nur Wasser über die Membran in den Katholyten ausgetragen. Wird mehr Wasser über die Natriumchlorid-haltige Lösung eingebracht als zum Katholyten transportiert werden kann, verarmt der Anolyt an Natriumchlorid und die Elektrolyse kann nicht kontinuierlich betrieben werden. Bei sehr geringen Natriumchlorid-Konzentrationen würde die Nebenreaktion der Sauerstoffbildung einsetzen.

Um maximale Mengen an Natriumchlorid-haltigen Lösungen wirtschaftlich der Natriumchlorid-Elektrolyse zuzuführen, kann es nützlich sein, dass der Wassertransport über die Membran erhöht wird. Dieser kann durch Auswahl geeigneter Membranen erfolgen, wie in der US-A-4025405 beschrieben. Der Effekt eines erhöhten Wassertransportes ist, dass auf die sonst übliche Wasserzugabe zur Aufrechterhaltung der Laugekonzentration verzichtet werden kann.

Gemäß der US-A-3 773 634 kann bei hohem Wassertransport durch die Membran die Elektrolyse dann betrieben werden, wenn eine Laugekonzentration von 31 bis 43 Gew.-% und eine Natriumchlorid-Konzentration von 120 bis 250 g/l eingesetzt wird.

Eine weitere Möglichkeit mehr einer Natriumchlorid-haltigen Lösung aus der PolycarbonatProduktion einzusetzen ist es, diese Lösung aufzukonzentrieren z.B. durch Membranverfahren wie der reversen osmotischen Destillation oder durch thermische Eindampfung. Wird die Eindampfung über die Sättigungsgrenze hinaus durchgeführt, kann das gesamte Natriumchlorid recycliert werden und somit der Wertschöpfungskreis geschlossen werden.

Auf den Inhalt der vorgenannten, im Zusammenhang mit der Herstellung von Chlorgas zitierten Schriften wird ausdrücklich und vollumfänglich Bezug genommen.

Im Rahmen einer besonders bevorzugten Ausführungsform wird die Chloralkali-Elektrolyse mittels aus regenerativer Energie erzeugten elektrischen Stroms durchgeführt, insbesondere unter Einsatz von elektrischem Strom wahlweise erhalten durch Nutzung von Windkraft, Sonnenenergie oder Wasserkraft.

Die Polycarbonate werden in verschiedenen Anwendungen im Markt genutzt. Nach dem Ende ihrer Nutzungszeit werden die Materialien einem Recycling zugeführt und hier die PC enthaltenden Materialien abgetrennt. Das abgetrennte Material wird dann als Polycarbonat-Material Abfall wieder der Verwertung in Form einer Pyrolyse und/oder der Verbrennung zugeführt.

Hierdurch werden keine weiteren fossilen Rohstoffe für die Polycarbonat-Herstellung benötigt und es kann in verbessert nachhaltiger Weise Polycarbonat-Material hergestellt werden.

Das erfindungsgemäße Verfahren kann bevorzugt mit einer erfindungsgemäßen Vorrichtung als weiterem Gegenstand der Erfindung ausgeführt werden, wobei diese Vorrichtung für die Durchführung des erfindungsgemäßen Verfahrens ausgestaltet ist.

Eine bevorzugte Ausführungsform für ein entsprechend geeignetes Vorrichtungs-System für die Herstellung von Polycarbonat umfasst mindestens folgende Vorrichtungsteile in folgender Konfiguration
- mindestens einen Elektrolyseur für die Chloralkali-Elektrolyse, enthaltend mindestens einen Einlass für eine wässrige Lösung von Alkalichlorid, insbesondere von Natriumchlorid, mindestens einen Auslass für Chlor und mindestens einen Auslass für Wasserstoff;
- mindestens einen RWGS-Reaktor, enthaltend mindestens eine RWGS Reaktionszone, mindestens ein Heizelement als eine Vorrichtung zur Zuführung von Wärmeenergie zur RWGS Reaktionszone, sowie mindestens einen Einlass für die Einbringung von CO₂ und Wasserstoff in die RWGS Reaktionszone und mindestens einen Auslass für das Kohlenmonoxid-haltige Produktgas aus dem RWGS-Reaktor, mit der Maßgabe, dass
   (i) mindestens ein Einlass für die Einbringung von Wasserstoff in die RWGS Reaktionszone in Fluidverbindung mit mindestens einem Auslass für Wasserstoff des mindestens einen Elektrolyseurs für die Chloralkali-Elektrolyse steht und
   (ii) mindestens ein Einlass für die Einbringung von CO₂ in die RWGS Reaktionszone in Fluidverbindung mit mindestens einer Versorgungsquelle eines gereinigten CO₂ Gasstroms steht, der der durch zumindest folgende Schritte hergestellt wurde:
      a) Bereitstellung eines CO₂ Gasstroms,
      b) Reinigung des CO₂ Gasstroms von Nebenbestandteilen (insbesondere von Stickoxiden, Schwefelverbindungen, Phosphorverbindungen, Staub, Wasser, Sauerstoff und HCl) wahlweise mittels Adsorption, Gaswäsche oder katalytischer Behandlung, und
   (iii) mindestens ein Auslass für das Kohlenmonoxid-haltige Produktgas aus dem RWGS-Reaktor in Fluidverbindung mit der Abtrennung des Wassers steht;
- mindestens eine Vorrichtung zur Abtrennung von Wasser, die zumindest einen Einlass aufweist, der in Fluidverbindung mit dem Auslass für das Kohlenmonoxid-haltige Produktgas aus dem Reformer steht und mindestens einen Auslass für das abgetrennte Wasser und mindestens einen Auslass für das getrocknete, Kohlenmonoxid-haltigen Produktgas;
- mindestens eine Vorrichtung zur Abtrennung von CO₂, die zumindest einen Einlass aufweist, der in Fluidverbindung mit dem Auslass für das getrocknete, Kohlenmonoxid-haltige Produktgas aus der Vorrichtung zur Abtrennung von Wasser steht und mindestens einen Auslass für das abgetrennte CO₂, der in Fluidverbindung mit einem Einlass für CO₂ des RWGS-Reaktors steht und mindestens einen Auslass für das vorgereinigte, Kohlenmonoxid-haltige Produktgas;
- mindestens eine Vorrichtung zur Trennung von H₂-CO, enthaltend zumindest einen Einlass, der in Fluidverbindung mit dem Auslass für das vorgereinigte, Kohlenmonoxid-haltige Produktgas aus der Vorrichtung zur Abtrennung von CO₂ steht, mindestens einen Auslass für das Kohlenmonoxid und mindestens einen Auslass für das Restgas der H₂-CO Trennung;
- mindestens eine Vorrichtung zur Herstellung von Phosgen, die mindestens einen Einlass für Kohlenmonoxid aufweist, der in Fluidverbindung mit dem für das Kohlenmonoxid vorgesehenen Auslass der Vorrichtung zur Trennung von H₂-CO in Fluidverbindung steht, sowie mindestens einen Auslass für Phosgen und mindestens einen Einlass für Chlor enthält, wobei mindestens ein Einlass für Chlor in Fluidverbindung mit mindestens einem Auslass für Chlor des besagten Elektrolyseurs steht;
- mindestens eine Vorrichtung zur Herstellung von Polycarbonat, enthaltend mindestens einen Einlass für Diol, mindestens einen Auslass für Polycarbonat und mindestens einen Einlass für Phosgen, der in Fluidverbindung mit mindestens einem Auslass für Phosgen der Vorrichtung zur Herstellung von Phosgen steht.

Unter einer "Fluidverbindung" wird erfindungsgemäß ein Vorrichtungsteil verstanden, der Vorrichtungen des Vorrichtungs-Systems miteinander verbindet und durch die sich ein Stoff, der in jedem Aggregatzustand vorliegen kann, von einer Vorrichtung zu einer anderer Vorrichtung des Vorrichtungs-Systems durch einen Stoffstrom transportieren lässt, beispielsweise eine Zuleitung in Form eines Rohres, die durch weitere Vorrichtungen unterbrochen sein kann.

Es ist analog zum zuvor beschriebenen Verfahren im Rahmen einer bevorzugten Ausführungsform des Vorrichtungs-Systems ebenfalls bevorzugt, wenn der Auslass für das Restgas der Vorrichtung zur H₂-CO Trennung mit mindestens einem Einlass für Wasserstoff des RWGS Reaktors, in Fluidverbindung steht. Für eine Ausnutzung des Wasserstoffgases aus dem Restgas der Vorrichtung der H₂-CO Trennung für Synthesezwecke ist es bevorzugt, wenn der Auslass für das Restgas der Vorrichtung der H₂-CO Trennung mit dem Einlass einer Vorrichtung zur Restgasbehandlung in Fluidverbindung steht, wobei besagte Vorrichtung zur Restgasbehandlung mindestens einen Auslass für Wasserstoffgas und mindestens einen Auslass für Restgas der Restgasbehandlung besitzt. In diesem Falle ist es bevorzugt, wenn der Auslass für das Restgas der Vorrichtung für die Restgasbehandlung in Fluidverbindung mit dem Heizelement des RWGS-Reaktors, insbesondere mit der Brennkammer des Heizelementes, steht.

Für die Synthese von Polycarbonat ist es im Rahmen einer bevorzugten Ausführungsform des Vorrichtungs-Systems vorteilhaft, wenn mindestens ein Auslass für Polycarbonat der Vorrichtung zur Herstellung von Polycarbonat mit mindestens einem Einlass einer Vorrichtung zur Compoundierung in Fluidverbindung steht. Dabei ist es besonders bevorzugt, wenn die Vorrichtung zur Compoundierung neben dem mindestens einen Einlass für Polycarbonat zusätzlich mindestens einen Einlass für Farbstoffe, mindestens einen Einlass für Polymer als Blendpartner und mindestens einen Auslass für Polycarbonat-Material enthält. Als Polymer (Blendpartner) eignet sich erfindungsgemäß bevorzugt mindestens einer der vorgenannten Schlagzähmacher.

Als Versorgungsquelle eines gereinigten CO₂ Gasstromes dient im Rahmen einer bevorzugten Ausführungsform des RWGS-Reaktors eine CO₂ Versorgungsvorrichtung, enthaltend
- mindestens einen Reaktor zur Produktion von CO₂, der mindestens einen Auslass für Kohlendioxid-haltiges Produktgas aufweist, und
- mindestens eine Reinigungs-Vorrichtung, enthaltend (i) mindestens einen Einlass für Kohlendioxid-haltiges Produktgas, der mit mindestens eine Auslass für Kohlendioxid-haltiges Produktgas des Reaktors zur Produktion von CO₂ in Fluidverbindung steht, und (ii) mindestens einen Auslass für einen gereinigten CO₂ Gasstrom, der in Fluidverbindung mit mindestens einen Einlass für gereinigten CO₂ Gasstrom des RWGS-Reaktors steht.

Der Reaktor zur Produktion von CO₂ weist in einer weiter bevorzugten Ausführungsform mindestens einen Einlass für die Einspeisung von Polycarbonat-Material Abfall, sowie mindestens einen Einlass für die Einbringung von Sauerstoff-haltigem Gas auf. Dabei ist es wiederum bevorzugt, wenn das Vorrichtungs-System zusätzlich mindestens einen Elektrolyseur zur Wasserelektrolyse aufweist, dessen Auslass von Sauerstoffgas mit mindestens einem Einlass für die Einbringung von Sauerstoff-haltigem Gas des Reaktors zur Produktion von CO₂in Fluidverbindung steht.

Ein weiterer Gegenstand der Erfindung ist die Verwendung von bereitgestelltem Kohlenmonoxid, erhalten durch ein Verfahren, enthaltend folgende Schritte
Bereitstellung eines gereinigten CO₂ Gasstroms, der durch eine Methode, enthaltend zumindest folgende Schritte, hergestellt wurde:
   Bereitstellung eines CO₂ Gasstroms,
   Reinigung des CO₂ Gasstroms von Nebenbestandteilen (insbesondere von Stickoxiden, Schwefelverbindungen, Staub, Wasser, Sauerstoff und HCl) wahlweise mittels Adsorption, Gaswäsche oder katalytischer Behandlung unter Erhalt eines Gasstroms gereinigten Kohlendioxids,
Einspeisung von Wasserstoff zusammen mit dem gereinigten CO₂ Gasstrom in eine RWGS Reaktionszone und Umsetzung der Edukte nach dem Prinzip der RWGS zu einem Produktgasgemisch enthaltend neben nicht umgesetztem Edukt zusätzlich Wasserdampf, CO und gegebenenfalls Nebenprodukte, insbesondere niedere Kohlenwasserstoffe, insbesondere bevorzugt Methan,
Abtrennung des Wassers des Wasserdampfes aus dem Produktgasgemisch,
Abtrennung von nicht umgesetztem Kohlendioxid aus dem aus der Abtrennung erhaltenen Gasgemischs der RWGS Reaktion, insbesondere mittels Aminwäsche, und Rückführung des nicht umgesetzten Kohlendioxids in die RWGS Reaktion,
Abtrennung des in der RWGS Reaktion nicht umgesetzten Wasserstoffs aus dem nach der Abtrennung erhaltenen Gasgemisch von Kohlenmonoxid und Wasserstoff, insbesondere unter Verwendung einer Coldbox, und Rückführung des abgetrennten Wasserstoffs in die RWGS Reaktion,
zur Herstellung von Polycarbonat durch zumindest folgende Schritte
Herstellung von zumindest Chlor und Wasserstoff durch Chloralkali-Elektrolyse von Alkalichlorid, bevorzugt Natriumchlorid, in wässriger Lösung,
Einspeisung des bereitgestellten Kohlenmonoxids in eine Phosgensynthese,
Zuführung des zuvor gebildeten Chlors in die Phosgensynthese .
Synthese von Phosgen aus Kohlenmonoxid und Chlor,
Umsetzung von zumindest Phosgen mit mindestens einem Diol zu mindestens einem Polycarbonat.

Die zuvor für den Erfindungsgegenstand des Verfahrens beschriebenen bevorzugten Ausführungsformen gelten ebenso mutatis mutandis für diesen Erfindungsgegenstand der Verwendung und die darin enthaltenen Merkmale.

Die Erfindung wird nachstehend anhand der Figuren beispielhaft näher erläutert.

Es zeigen:

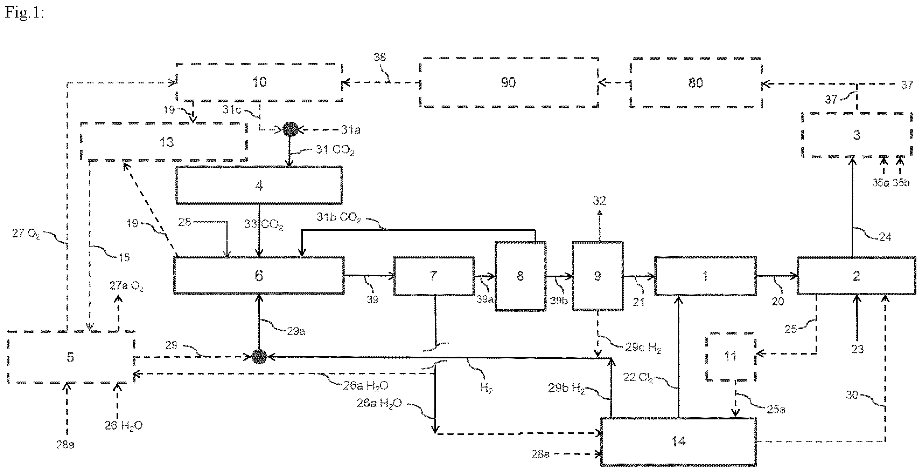

- Fig. 1: Eine schematische Übersicht über das Gesamtverfahren mit RWGS Reaktion, Chlorherstellung, PC Herstellung, Verwendung und Verwertung des Polycarbonat-Material Abfalls daraus zu CO₂ für die RWGS Reaktion

Fig. 1 zeigt ein Verfahren zur Herstellung von Polycarbonat umfassend mindestens folgende Schritte,
Herstellung von zumindest Chlor 22 und Wasserstoff 29b durch Chloralkali-Elektrolyse 14 von Alkalichlorid, bevorzugt Natriumchlorid, in wässriger Lösung,
Bereitstellung eines gereinigten CO₂ Gasstroms 33, der durch eine Methode, enthaltend zumindest folgende Schritte, hergestellt wurde:
   Bereitstellung eines CO₂ Gasstroms 31
   Reinigung 4 des CO₂ Gasstroms 31 von Nebenbestandteilen (insbesondere von Stickoxiden, Schwefelverbindungen, Staub, Wasser, Sauerstoff und HCl) wahlweise mittels Adsorption, Gaswäsche oder katalytischer Behandlung unter Erhalt eines Gasstroms gereinigten Kohlendioxids 33,
Einspeisung von Wasserstoff 29a zusammen mit dem gereinigten CO₂ Gasstrom 33 in eine RWGS Reaktionszone und Umsetzung 6 der Edukte nach dem Prinzip der RWGS zu einem Produktgasgemisch 39 enthaltend neben nicht umgesetztem Edukt zusätzlich Wasserdampf 26b, CO 21 und gegebenenfalls Nebenprodukte 32, insbesondere niedere Kohlenwasserstoffe, insbesondere bevorzugt Methan,
Abtrennung 7 des Wassers des Wasserdampfes 26b aus dem Produktgasgemisch 39,
Abtrennung 8 von nicht umgesetztem Kohlendioxid 31b aus dem aus der Abtrennung 7 erhaltenen Gasgemischs 39a der RWGS Reaktion 6, insbesondere mittels Aminwäsche, und Rückführung des nicht umgesetzten Kohlendioxids 31b in die RWGS Reaktion 6,
Abtrennung 9 des in der RWGS Reaktion 6 nicht umgesetzten Wasserstoffs aus dem nach der Abtrennung 8 erhaltenen Gasgemisch 39b von Kohlenmonoxid und Wasserstoff, insbesondere unter Verwendung einer Coldbox, und Rückführung des abgetrennten Wasserstoffs 29c in die RWGS Reaktion 6,
Einspeisung des verbliebenen Kohlenmonoxids 21 aus der Abtrennung 9 in die Phosgensynthese 1,
Zuführung des zuvor gebildeten Chlors 22 in die Phosgensynthese 1.
Synthese 1 von Phosgen 20 aus Kohlenmonoxid 21 und Chlor 22,
Umsetzung 2 von zumindest Phosgen 20 mit mindestens einem Diol 23 zu mindestens einem Polycarbonat 24.

Bevorzugt wird gemäß Fig. 1 für die RWGS-Synthese 6 gereinigtes Kohlendioxid 33 verwendet, das aus der Verwertung 10 von Polycarbonat-Material Abfall 38 durch Verbrennung 10b und/oder durch Pyrolyse 10a als Kohlendioxid 31a bereitgestellt und in der Reinigung 4 gereinigt wird.

Dabei wiederum bevorzugt kann gemäß Verfahren der Fig. 1 als Verwertung 10 eine Verbrennung 10b unter Verwendung von Gas mit einem Sauerstoffgas-Gehalt (O₂) von mindestens 30 Vol.% durchgeführt werden, insbesondere unter Einsatz von Sauerstoffgas 27a, das aus einer Wasserelektrolyse 5 erhalten wird. Eine bevorzugte Ausführungsform ist, wenn die Wasserelektrolyse 5 unter Verwendung von aus regenerativer Energie erzeugtem elektrischem Strom 28a durchgeführt wird, insbesondere aus regenerativer Energie in Form von Windkraft, Sonnenenergie oder Wasserkraft. Aus der Verwertung 10 und der RWGS Reaktion 6 kann Wärmeenergie 19 zur Energie- und Dampfproduktion 13 abgeführt werden, wobei die Wasserelektrolyse 5 zusätzlich mit in der Energieproduktion 13 erzeugtem elektrischen Strom 15 betrieben werden kann.

Der RWGS Reaktion 6 wird gemäß Fig. 1 Wärmeenergie zugeführt, die entweder mittels aus regenerativer Energie erzeugten elektrischen Stroms 28 hergestellt wird, insbesondere elektrischem Strom wahlweise erhalten durch Nutzung von Windkraft, Sonnenenergie oder Wasserkraft. Weiter wird die Heizung der RWGS Reaktion 6 mittels Verbrennung von Kohlenwasserstoffen aus regenerativer Herkunft, insbesondere mittels Verbrennung von Biomethan, erfolgen.

Zur bevorzugten Bereitstellung des CO₂ Gasstroms 31 wird gemäß des in Fig. 1 illustrierten Verfahrens bevorzugt Polycarbonat Material 37 nach seiner Nutzung 80 unter Erhalt von Polycarbonat-Material 37 enthaltenden End-of life Produkten eingesetzt und anschließend der aus dem Recycling 90 aus den End-of life Produkten erhaltene Polycarbonat-Material Abfall 38 rezykliert und zu Kohlendioxid 31c verbrannt, wobei das Kohlendioxid 31c als Einsatzmaterial 31 in die Reinigung 4 geführt wird (closed loop Recycling). Ebenfalls kann gemäß Fig. 10 zur Verwertung 10 auch solcher Polycarbonat-Material Abfall 38 eingesetzt werden, der aus Polycarbonat Material 37 stammt, dass nicht nach dem erfindungsgemäßen Verfahren hergestellt wurde.

Weiter wird in dem in Fig. 1 abgebildeten Verfahren bevorzugt in der Umsetzung 2 von zumindest Phosgen 20 mit mindestens einem Diol 23 neben mindestens einem Polycarbonat zusätzlich Alkalichlorid in Lösung 25 gebildet, und diese Lösung einer Abtrennung und Reinigung 11 unterworfen, wobei das besagte in wässriger Lösung befindliche, abgetrennte und gereinigte Alkalichlorid 25a der Chloralkali-Elektrolyse 14 zugeführt wird.

Im Verfahren der Fig. 1 wird die Chloralkali-Elektrolyse 14 bevorzugt mittels aus regenerativer Energie erzeugten elektrischen Stroms 28a durchgeführt, insbesondere elektrischen Stroms 28a wahlweise erhalten durch Nutzung von Windkraft, Sonnenenergie oder Wasserkraft.

Zudem wird in Fig. 1 eine Ausführungsform des Verfahrens gezeigt, in der der Umsetzung 2 von zumindest Phosgen 20 mit mindestens einem Diol 23 zu mindestens einem Polycarbonat 24 zusätzlich Alkalihydroxid-Lösung 30 gewonnen aus der Chloralkali-Elektrolyse 14 zugeführt wird.

Das aus der Umsetzung 2 erhaltene Polycarbonat 24 kann gemäß Verfahren der Fig. 1 bevorzugt in der Compoundierung 3 unter Zusatz von Farbmittel oder weitere Additive 35a sowie mindestens einem weiteren Polymer als Blendpartner 35b (beispielsweise Polystyrol-Copolymer) zu Polycarbonat Material 37 umgesetzt werden.

In Figur 1 haben die folgenden Bezugszeichen die jeweils rechtsstehende Bedeutung:
- 1: Phosgensynthese
- 2: Polycarbonatherstellung
- 3: Compoundierung zur Herstellung von Polycarbonat-Material 37
- 4: CO₂ Gasreinigung
- 5: Wasserelektrolyse
- 6: RWGS Reaktion (Reverse Water Gas Shift Reaction)
- 7: Wasser-Abtrennung
- 8: CO₂ Abtrennung
- 9: H₂-CO Trennung
- 10: Verwertung von Polyurethan-Material Abfall 38 durch Pyrolyse (10a) und/oder Verbrennung (10b)
- 10a: Pyrolyse
- 10b: Verbrennung
- 11: Aufbereitung NaCl aus Abwasser 25
- 13: Energie- und Dampferzeugung
- 14: Chloralkali-Elektrolyse zur Herstellung von Cl₂ und H₂ sowie bevorzugt Alkalihydroxid-Lösung
- 15: Elektrischer Strom aus Energie/Dampf (13)
- 19: Wärme
- 20: Phosgen aus der Phosgensynthese 1
- 21: abgetrenntes Kohlenmonoxid aus der H₂-CO Trennung 9
- 22: Chlorgas
- 23: Diol (beispielsweise Bisphenol-A)
- 24: Polycarbonat
- 25: Alkalichlorid-haltiges Abwasser, insbesondere NaCl-haltiges Abwasser
- 25a: aufbereiteteAlkalichlorid-haltiges Abwasser, insbesondere aufbereitetes Natriumchloridhaltiges Abwasser
- 26: Wasser
- 26a: abgetrenntes Wasser aus Produktgasgemisch 39 der RWGS Reaktion
- 27: Sauerstoff aus der Wasserelektrolyse
- 27a: Sauerstoff aus der Wasserelektrolyse für andere Anwendungen
- 28: Bio-Erdgas u/o regenerative Energie nur zur Heizung
- 28a: Elektrischer Strom aus regenerativer Energie
- 29: Wasserstoff aus der Wasserelektrolyse
- 29a: Wasserstoff für die RWGS Reaktion
- 29b: Wasserstoff aus der Chloralkali-Elektrolyse 14
- 29c: abgetrennter Wasserstoff aus der H₂-CO Trennung
- 30: wässrige Lösung von Alkalihydroxid, bevorzugt Natriumhydroxid
- 31: CO₂ für die Zuführung zur CO₂-Gasreinigung 4
- 31a: CO₂ aus regenerativer Quelle
- 31b: Nicht umgesetztes CO₂ aus der CO₂ Abtrennung
- 31c: CO₂ aus 10
- 32: abgetrennte Nebenprodukte aus der RWGS Reaktion
- 33: Gereinigtes CO₂
- 35a: Farbmittel oder weitere Additive
- 35b: Polymer als Blendpartner (beispielsweise Polystyrol-Copolymer)
- 37: Polycarbonat-Material
- 38: Polycarbonat-Material enthaltender Abfall (Polycarbonat-Material Abfall)für 10
- 39: Produktgasgemisch aus der RWGS Reaktion bestehend aus Kohlenmonoxid, Wasser CO₂, Wasserstoff und Nebenprodukten
- 39a: 39 mit reduziertem Gehalt an Wasser
- 39b: 39a mit reduziertem Gehalt an CO₂
- 80: Nutzung von 37 im Markt
- 90: Polycarbonat basierte Materialien - End-of-Life Recycling

Pfeile in der Figur symbolisieren den Fluss von Stoffen, Energie oder Wärme zwischen Verfahrensschritten bzw. durch eine dafür vorgesehene Fluidverbindung von Vorrichtungsteilen, in denen die entsprechenden Verfahrensschritte ablaufen. Gestrichelte Linien in den Figuren bedeuten Teile von bevorzugten Ausführungsformen einzelner zuvor beschriebener Merkmale des Verfahrens. Ein gefüllter Kreis steht für einen Knotenpunkt eines Stoffflusses.

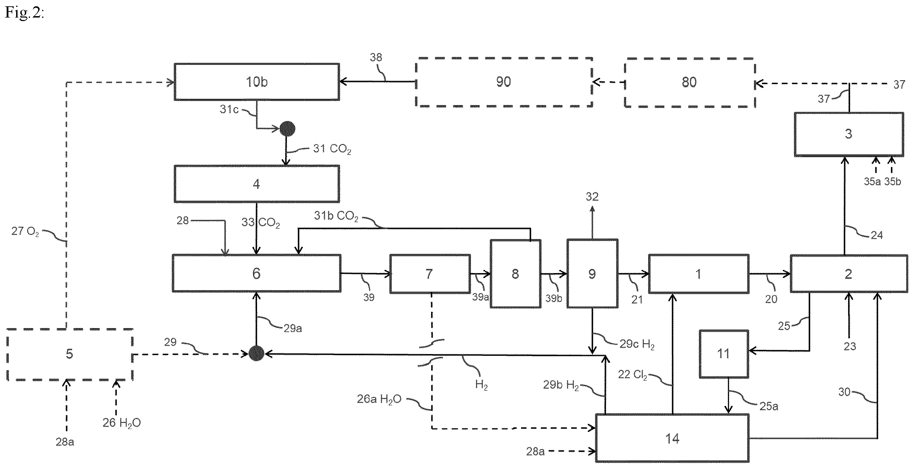

- Fig. 2: Eine schematische Übersicht über das in Beispiel 1 beschriebene Verfahren mit RWGS Reaktion, einer Chlor-Alkali-Elektrolyse einschließlich der PC Herstellung, Verwendung des Polycarbonat-Materials und Verwertung des Polycarbonat-Material Abfall daraus zu CO₂ für die RWGS Reaktion.

Die Vergabe der in Fig. 2 verwendeten Bezugszeichen erfolgt wie für Fig. 1 definiert.

### Beispiel 1

### Erfindungsgemäße Herstellung von emissionsarmen Polycarbonat, CO Herstellung mittels RWGS, deren Beheizung mit Bio-Erdgas erfolgt, NaCl Recycling und Verwendung in der Chloralkali-Elektrolyse

In einem RWGS Reaktionsraum (6), der bei einer Temperatur von 802°C betrieben wird, werden 17,84 t/h CO₂ sowie 0,81 t/h H₂ eingebracht. Aus der RWGS Reaktion wird das erhaltene Produktgasgemisch (39) bestehend aus CO, H₂O, nicht umgesetztem CO₂ sowie nicht umgesetzter H₂ sowie Nebenprodukten, hauptsächlich geringe Mengen an Methan, entnommen und einer Wasser-Abtrennung (7) zugeführt, bei der 7,29 t/h Wasser (26b) abgetrennt werden. Dieses Wasser (26b) kann der Chloralkalielektrolyse zumindest teilweise wieder zugeführt werden. Aus der Chloralkali-Elektrolyse (14) werden insgesamt 0,81 t/h Wasserstoff (29b) entnommen. Das verbleibende Gasgemisch (39a) aus der H₂O-Abtrennung (7) wird einer CO₂ Abtrennung (8) zugeführt. Die CO₂ Abtrennung erfolgt mittels Aminwäsche, wobei das abgetrennte CO₂ (31b) wieder der RWGS Reaktion zugeführt wird. Die Energie zur CO₂ Abtrennung aus dem gebildeten CO₂-Aminkomplex wird aus der Wasser-Abtrennung (7), bei der die RWGS Reaktionsgase Gase (39) abgekühlt werden, bezogen. Das von CO₂ befreite Gas (39b) wird der H₂-CO Trennung (9) zugeführt. Für die H₂-CO Trennung wird eine sogenannte Cold-box eingesetzt, bei der das H₂-CO Gasgemisch abgekühlt und Wasserstoff und CO getrennt werden. Der abgetrennte Wasserstoff (29c) wird der RWGS Reaktion (6) wieder zugeführt. Aus der H₂-CO Trennung (9) werden 11,35 t/h CO einer Phosgensynthese (1) zugeführt. Hierbei reagierte das CO mit 28,8 t/h Chlor, welches aus einer Cl₂-Herstellung durch Chloralkalielektrolyse (14) entnommen wird. Aus der Phosgensysnthese (1) werden 40,15 t/h Phosgen entnommen und in einer Polycarbonat-Herstellung als Lösung in Chloriertem Lösungsmittel (z.B. 435 t/h eines 1: 1 Gemisches aus Methylenchlorid und Chlorbenzol) (2) mit 540 t/h 15 Gewichtsprozentiger Bisphenol-A Lösung (81 t/h BPA entsprechend 354,8 kmol) in alkalischem Wasser (mit 2,13 Mol NaOH pro Mol Bisphenol A, entsprechend 755,7 kmol NaOH = 30,2 t/h NaOH und 64,17 1 H₂O als 32 %ige Natronlauge)) als Diol (23) zu 92,72 t/h Polycarbonat (24) umgesetzt mittels Einsatz mindestens eines Kettenabbrechers (z.B. 2,3 t/h tert-Butylphenol), 29 t/h weiterer 22 Gewichtsprozentiger NaOH-Lösung (6,38 t/h NaOH und 17,84 t/h H₂O als 32%ige Natronaluge) und mindestens ein Katalysator (z.B. 0,45 t/h N-Ethylpiperidin). Dabei werden 32,45 t/h NaOH mit 68,95 t/h Wasser als 32 Gew.%ige Natronlauge 30 aus der ChlorAlkalielektrolyse 14 bezogen. Eine zusätzliche Menge von 4,13 t/h NaOH mit 17,84 t/h H₂O wird extern zugekauft und zugeführt.

Das dabei anfallende NaCl-haltige Abwasser (25) mit einer Menge von 53,5 t/h NaCl und 1016,5 t/h Wasser als NaCl-haltiges Abwasser erhalten. Ein Teilstrom bestehend aus 0,77g/h NaCl und 14,6 t/h wird nach Reinigung über eine Strippanlage mit Schleppgas und ein Aktivkohle Reinigung einer Cl₂-Herstellung durch Chloralkali-elektrolyse (14) zugeführt. Damit wird der Wasserbedarf der Elektrolyse gedeckt, womit der Zusatz von Wasser zur Chloralkali-Elektrolyse entfällt. Dies schont die Ressource Wasser . Das erhaltene Polycarbonat (24) wird zur Darstellung von Polycarbonat-Material (37) eingesetzt.

Nach Nutzung des Polycarbonat-Materials in diversen Anwendungen im Markt (80), kann dieses gesammelt und recycelt (90) werden, um den daraus erhaltenen Polycarbonat-Material Abfall (38) einer Verbrennung (10b) zuzuführen. Die Verbrennung erfolgt dabei vorzugsweise mit Sauerstoff (27) aus einer Wasserelektrolyse (5), so dass ein hochkonzentrierter CO₂ Abgasstrom (31) entsteht. Dieser CO₂ Strom (31) wird einer CO₂ Reinigung (4) zugeführt und dabei das aus der Verbrennung stammende Wasser entfernt und Stickstoffoxide sowie Schwefeloxide abgetrennt. Hiernach werden 17,84 t/h CO₂ bereitgestellt und der RWGS (6) zugeführt.

Die RWGS Reaktion wird bei 802°C betrieben, wobei zur Aufrechterhaltung der Reaktionstemperatur Bio-Erdgas (28) einspeist und verbrannt wird.

Durch das erfindungsgemäße Verfahren können 6,25% des Kohlenstoffs, der im PC vorhanden ist, aus einer nichtfossilen Kohlenstoffquelle ersetzt werden. Durch Einsatz von regenerativer Energie bei der Chloralkalielektrolyse wird der CO₂-Footprint des aus CO und Cl₂ hergestellten Phosgens weiterhin erniedrigt und ermöglicht so ein nachhaltige hergestelltes PC.

## Patentansprüche

1. Verfahren zur Herstellung von Polycarbonat umfassend mindestens folgende Schritte, Herstellung von zumindest Chlor (22) und Wasserstoff (29b) durch Chloralkali-Elektrolyse (14) von Alkalichlorid, bevorzugt Natriumchlorid, in wässriger Lösung, Bereitstellung eines gereinigten CO₂ Gasstroms (33), der durch eine Methode, enthaltend zumindest folgende Schritte, hergestellt wurde:
Bereitstellung eines CO₂ Gasstroms (31),
Reinigung (4) des CO₂ Gasstroms (31) von Nebenbestandteilen, insbesondere von
Stickoxiden, Schwefelverbindungen, Staub, Wasser, Sauerstoff und HCl,
wahlweise mittels Adsorption, Gaswäsche oder katalytischer Behandlung unter Erhalt eines Gasstroms gereinigten Kohlendioxids (33),
Einspeisung von Wasserstoff (29a) zusammen mit dem gereinigten CO₂ Gasstrom (33) in eine RWGS Reaktionszone und Umsetzung (6) der Edukte nach dem Prinzip der RWGS zu einem Produktgasgemisch (39) enthaltend neben nicht umgesetztem Edukt zusätzlich Wasserdampf (26b), CO (21) und gegebenenfalls Nebenprodukte (32), insbesondere niedere Kohlenwasserstoffe, insbesondere bevorzugt Methan,
Abtrennung (7) des Wassers des Wasserdampfes (26b) aus dem Produktgasgemisch (39), Abtrennung (8) von nicht umgesetztem Kohlendioxid (31b) aus dem aus der Abtrennung (7) erhaltenen Gasgemischs (39a) der RWGS Reaktion (6), insbesondere mittels Aminwäsche, und Rückführung des nicht umgesetzten Kohlendioxids (31b) in die RWGS Reaktion (6),
Abtrennung (9) des in der RWGS Reaktion (6) nicht umgesetzten Wasserstoffs aus dem nach der Abtrennung (8) erhaltenen Gasgemisch (39b) von Kohlenmonoxid und Wasserstoff, insbesondere unter Verwendung einer Coldbox, und Rückführung des abgetrennten Wasserstoffs (29c) in die RWGS Reaktion (6),
Einspeisung des verbliebenen Kohlenmonoxids (21) aus der Abtrennung (9) in die Phosgensynthese (1),
Zuführung des zuvor gebildeten Chlors (22) in die Phosgensynthese (1).
Synthese (1) von Phosgen (20) aus Kohlenmonoxid (21) und Chlor (22),
Umsetzung (2) von zumindest Phosgen (20) mit mindestens einem Diol (23) zu mindestens einem Polycarbonat (24).

2. Verfahren gemäß Anspruch 1, **dadurch gekennzeichnet, dass** für die RWGS-Synthese (6) gereinigtes Kohlendioxid (33) verwendet wird, das aus der Verwertung (10) von Polycarbonat-Material Abfall (38) durch Verbrennung (10b) und/oder durch Pyrolyse (10a) als Kohlendioxid (31a) bereitgestellt und in der Reinigung (4) gereinigt wird.

3. Verfahren gemäß Anspruch 2, **dadurch gekennzeichnet, dass** die Verbrennung (10b) unter Verwendung von Gas mit einem Sauerstoffgas-Gehalt (O₂) von mindestens 30 Vol.% durchgeführt wird, insbesondere unter Einsatz von Sauerstoffgas (27a), das aus einer Wasserelektrolyse (5) erhalten wird.

4. Verfahren gemäß Anspruch 2 oder 3, **dadurch gekennzeichnet, dass** das Gas einen Sauerstoffgas-Gehalt (O₂) von mindestens 50 Vol.%, bevorzugt von mindestens 95 Vol.%, besonders bevorzugt von mindestens 99 Vol.%, ganz besonders bevorzugt von mindestens 99,5 Vol.%, aufweist.

5. Verfahren gemäß einem der Ansprüche 3 oder 4, **dadurch gekennzeichnet, dass** die Wasserelektrolyse (5) unter Verwendung von aus regenerativer Energie erzeugtem elektrischem Strom (28a) durchgeführt wird, insbesondere aus regenerativer Energie in Form von Windkraft, Sonnenenergie oder Wasserkraft.

6. Verfahren gemäß einem der Ansprüche 1 bis 5, **dadurch gekennzeichnet, dass** die Wasserelektrolyse (5) der Ansprüche 3 oder 4 und/oder dass die Chloralkali-Elektrolyse (14) unter Verwendung von elektrischem Strom aus rückgekoppelter Energie durchgeführt wird, die bei der Verbrennung von Polycarbonat-Material Abfall und/oder der Durchführung der RWGS Reaktion erhalten wird.

7. Verfahren gemäß einem der Ansprüche 1 bis 6, **dadurch gekennzeichnet, dass** der RWGS Reaktion (6) Wärmeenergie zugeführt wird, die mittels aus regenerativer Energie erzeugten elektrischen Stroms (28) hergestellt wird, insbesondere elektrischem Strom wahlweise erhalten durch Nutzung von Windkraft, Sonnenenergie oder Wasserkraft.

8. Verfahren gemäß einem der Ansprüche 1 bis 7, **dadurch gekennzeichnet, dass** die Zuführung von Wärmeenergie zur RWGS Reaktion (6) unter Einsatz von rückgekoppelter Energie durchgeführt wird, die aus der Verbrennung von Polycarbonat-Material Abfall (38) erhalten wird.

9. Verfahren gemäß einem der Ansprüche 1 bis 8, **dadurch gekennzeichnet, dass** die Heizung der RWGS Reaktion (6) mittels Verbrennung von Kohlenwasserstoffen aus regenerativer Herkunft, insbesondere mittels Verbrennung von Biomethan, erfolgt.

10. Verfahren gemäß einem der Ansprüche 1 bis 9, **dadurch gekennzeichnet, dass** für die Bereitstellung des CO₂ Gasstroms (31) Polycarbonat Material (37) nach seiner Nutzung als Polycarbonat-Material Abfall (38) rezykliert wird, und der Polycarbonat-Material Abfall (38) zu Kohlendioxid (31c) verbrannt und das Kohlendioxid (31c) als Einsatzmaterial in der Reinigung (4) eingesetzt wird.

11. Verfahren gemäß einem der Ansprüche 1 bis 10, **dadurch gekennzeichnet, dass** in der Umsetzung (2) von zumindest Phosgen (20) mit mindestens einem Diol (23) neben mindestens einem Polycarbonat zusätzlich Alkalichlorid in Lösung (25) gebildet wird, und diese Lösung einer Abtrennung und Reinigung (11) unterworfen wird, wobei das besagte in wässriger Lösung befindliche, abgetrennte und gereinigte Alkalichlorid (25a) der Chloralkali-Elektrolyse (14) zugeführt wird.

12. Verfahren gemäß einem der voranstehenden Ansprüche, **dadurch gekennzeichnet, dass** die Chloralkali-Elektrolyse (14) mittels aus regenerativer Energie erzeugten elektrischen Stroms (28a) durchgeführt wird, insbesondere elektrischen Stroms (28a) wahlweise erhalten durch Nutzung von Windkraft, Sonnenenergie oder Wasserkraft.

13. Verfahren gemäß einem der voranstehenden Ansprüche, **dadurch gekennzeichnet, dass** der Umsetzung (2) von zumindest Phosgen (20) mit mindestens einem Diol (23) zu mindestens einem Polycarbonat (24) zusätzlich Alkalihydroxid-Lösung (30), bevorzugt gewonnen aus der Chloralkali-Elektrolyse (14), zugeführt wird.

14. Vorrichtungs-System zur Herstellung von Polycarbonat umfassend mindestens folgende Vorrichtungsteile in folgender Konfiguration
- mindestens einen Elektrolyseur für die Chloralkali-Elektrolyse, enthaltend mindestens einen Einlass für eine wässrige Lösung von Alkalichlorid, insbesondere von Natriumchlorid, mindestens einen Auslass für Chlor und mindestens einen Auslass für Wasserstoff;
- mindestens einen RWGS-Reaktor, enthaltend mindestens eine RWGS Reaktionszone, mindestens ein Heizelement als eine Vorrichtung zur Zuführung von Wärmeenergie zur RWGS Reaktionszone, sowie mindestens einen Einlass für die Einbringung von CO₂ und Wasserstoff in die RWGS Reaktionszone und mindestens einen Auslass für das Kohlenmonoxid-haltige Produktgas aus dem RWGS-Reaktor, mit der Maßgabe, dass
(i) mindestens ein Einlass für die Einbringung von Wasserstoff in die RWGS Reaktionszone in Fluidverbindung mit mindestens einem Auslass für Wasserstoff des mindestens einen Elektrolyseurs für die Chloralkali-Elektrolyse steht und
(ii) mindestens ein Einlass für die Einbringung von CO₂ in die RWGS Reaktionszone in Fluidverbindung mit mindestens einer Versorgungsquelle eines gereinigten CO₂ Gasstroms steht, der der durch zumindest folgende Schritte hergestellt wurde:
a) Bereitstellung eines CO₂ Gasstroms,
b) Reinigung des CO₂ Gasstroms von Nebenbestandteilen (insbesondere von Stickoxiden, Schwefelverbindungen, Staub, Wasser, Sauerstoff und HCl) wahlweise mittels Adsorption, Gaswäsche oder katalytischer Behandlung, und
(iii) mindestens ein Auslass für das Kohlenmonoxid-haltige Produktgas aus dem RWGS-Reaktor in Fluidverbindung mit der Abtrennung des Wassers steht;
- mindestens eine Vorrichtung zur Abtrennung von Wasser, die zumindest einen Einlass aufweist, der in Fluidverbindung mit dem Auslass für das Kohlenmonoxid-haltige Produktgas aus dem Reformer steht und mindestens einen Auslass für das abgetrennte Wasser und mindestens einen Auslass für das getrocknete, Kohlenmonoxid-haltigen Produktgas;
- mindestens eine Vorrichtung zur Abtrennung von CO₂, die zumindest einen Einlass aufweist, der in Fluidverbindung mit dem Auslass für das getrocknete, Kohlenmonoxid-haltige Produktgas aus der Vorrichtung zur Abtrennung von Wasser steht und mindestens einen Auslass für das abgetrennte CO₂, der in Fluidverbindung mit einem Einlass für CO₂ des RWGS-Reaktors steht und mindestens einen Auslass für das vorgereinigte, Kohlenmonoxid-haltige Produktgas;
- mindestens eine Vorrichtung zur Trennung von H₂-CO, enthaltend zumindest einen Einlass, der in Fluidverbindung mit dem Auslass für das vorgereinigte, Kohlenmonoxid-haltige Produktgas aus der Vorrichtung zur Abtrennung von CO₂ steht, mindestens einen Auslass für das Kohlenmonoxid und mindestens einen Auslass für das Restgas der H₂-CO Trennung;
- mindestens eine Vorrichtung zur Herstellung von Phosgen, die mindestens einen Einlass für Kohlenmonoxid aufweist, der in Fluidverbindung mit dem für das Kohlenmonoxid vorgesehenen Auslass der Vorrichtung zur Trennung von H₂-CO in Fluidverbindung steht, sowie mindestens einen Auslass für Phosgen und mindestens einen Einlass für Chlor enthält, wobei mindestens ein Einlass für Chlor in Fluidverbindung mit mindestens einem Auslass für Chlor des besagten Elektrolyseurs steht;
- mindestens eine Vorrichtung zur Herstellung von Polycarbonat, enthaltend mindestens einen Einlass für Diol, mindestens einen Auslass für Polycarbonat und mindestens einen Einlass für Phosgen, der in Fluidverbindung mit mindestens einem Auslass für Phosgen der Vorrichtung zur Herstellung von Phosgen steht.

15. Verwendung von bereitgestelltem Kohlenmonoxid, erhalten durch ein Verfahren, enthaltend folgende Schritte
Bereitstellung eines gereinigten CO₂ Gasstroms, der durch eine Methode, enthaltend zumindest folgende Schritte, hergestellt wurde:
Bereitstellung eines CO₂ Gasstroms,
Reinigung des CO₂ Gasstroms von Nebenbestandteilen (insbesondere von Stickoxiden, Schwefelverbindungen, Phosphorverbindungen, Staub, Wasser, Sauerstoff und HCl) wahlweise mittels Adsorption, Gaswäsche oder katalytischer Behandlung unter Erhalt eines Gasstroms gereinigten Kohlendioxids,
Einspeisung von Wasserstoff zusammen mit dem gereinigten CO₂ Gasstrom in eine RWGS Reaktionszone und Umsetzung der Edukte nach dem Prinzip der RWGS zu einem Produktgasgemisch enthaltend neben nicht umgesetztem Edukt zusätzlich Wasserdampf, CO und gegebenenfalls Nebenprodukte, insbesondere niedere Kohlenwasserstoffe, insbesondere bevorzugt Methan,
Abtrennung des Wassers des Wasserdampfes aus dem Produktgasgemisch,
Abtrennung von nicht umgesetztem Kohlendioxid aus dem aus der Abtrennung erhaltenen Gasgemischs der RWGS Reaktion, insbesondere mittels Aminwäsche, und Rückführung des nicht umgesetzten Kohlendioxids in die RWGS Reaktion,
Abtrennung des in der RWGS Reaktion nicht umgesetzten Wasserstoffs aus dem nach der Abtrennung erhaltenen Gasgemisch von Kohlenmonoxid und Wasserstoff, insbesondere unter Verwendung einer Coldbox, und Rückführung des abgetrennten Wasserstoffs in die RWGS Reaktion,
zur Herstellung von Polycarbonat durch zumindest folgende Schritte
Herstellung von zumindest Chlor und Wasserstoff durch Chloralkali-Elektrolyse von Alkalichlorid, bevorzugt Natriumchlorid, in wässriger Lösung,
Einspeisung des bereitgestellten Kohlenmonoxids in eine Phosgensynthese,
Zuführung des zuvor gebildeten Chlors in die Phosgensynthese .
Synthese von Phosgen aus Kohlenmonoxid und Chlor,
Umsetzung von zumindest Phosgen mit mindestens einem Diol zu mindestens einem Polycarbonat.

## Claims

1. Process for producing polycarbonate, comprising at least the steps of
producing at least chlorine (22) and hydrogen (29b) by chloralkali electrolysis (14) of alkali metal chloride, preferably sodium chloride, in aqueous solution,
providing a purified CO₂ gas stream (33) produced by a method containing at least the steps of:
providing a CO₂ gas stream (31),
purifying (4) the CO₂ gas stream (31) of secondary constituents, in particular of nitrogen oxides, sulfur compounds, dust, water, oxygen and HCl, optionally by adsorption, gas scrubbing or catalytic treatment to obtain a gas stream of purified carbon dioxide (33),
introducing hydrogen (29a) together with the purified CO₂ gas stream (33) into an RWGS reaction zone and reacting (6) the reactants according to the principle of RWGS to afford a product gas mixture (39) containing not only unconverted reactant but also steam (26b), CO (21) and optionally byproducts (32), in particular lower hydrocarbons, especially preferably methane, separating (7) the water of the steam (26b) from the product gas mixture (39),
separating (8) unconverted carbon dioxide (31b) from the gas mixture (39a) of the RWGS reaction (6) obtained from the separation (7), in particular by amine scrubbing, and recycling the unconverted carbon dioxide (31b) into the RWGS reaction (6),
separating (9) the hydrogen unconverted in the RWGS reaction (6) from the gas mixture (39b) of carbon monoxide and hydrogen obtained after the separation (8), in particular using a coldbox, and recycling the separated hydrogen (29c) into the RWGS reaction (6), introducing the remaining carbon monoxide (21) from the separation (9) into the phosgene synthesis (1), supplying the previously formed chlorine (22) into the phosgene synthesis (1),
synthesizing (1) phosgene (20) from carbon monoxide (21) and chlorine (22),
reacting (2) at least phosgene (20) with at least one diol (23) to afford at least one polycarbonate (24).

2. Process according to Claim 1, **characterized in that** the RWGS synthesis (6) employs purified carbon dioxide (33) which is provided from the recovery (10) of polycarbonate material waste (38) by incineration (10b) and/or by pyrolysis (10a) as carbon dioxide (31a) and is purified in the purification (4).

3. Process according to Claim 2, **characterized in that** the incineration (10b) using gas having an oxygen gas content (O₂) of at least 30% by volume is performed, in particular using oxygen gas (27a) which is obtained from a water electrolysis (5).

4. Process according to Claim 2 or 3, **characterized in that** the gas has an oxygen gas content (O₂) of at least 50% by volume, preferably of at least 95% by volume, particularly preferably of at least 99% by volume, very particularly preferably of at least 99.5% by volume.

5. Process according to either of Claims 3 and 4, **characterized in that** the water electrolysis (5) is performed using electricity (28a) generated from renewable energy, in particular from renewable energy in the form of wind power, solar power or hydro power.

6. Process according to any of Claims 1 to 5, **characterized in that** the water electrolysis (5) of Claims 3 or 4 and/or **in that** the chloralkali electrolysis (14) are performed using electricity from feedback energy obtained during the incineration of polycarbonate material waste and/or the performing of the RWGS reaction.

7. Process according to any of Claims 1 to 6, **characterized in that** the RWGS reaction (6) is supplied with heat energy produced by means of electricity (28) generated from renewable energy, in particular electricity obtained through the use of wind power, solar power or hydro power as desired.

8. Process according to any of Claims 1 to 7, **characterized in that** the supplying of heat energy to the RWGS reaction (6) is performed using feedback energy obtained from the incineration of polycarbonate material waste (38).

9. Process according to any of Claims 1 to 8, **characterized in that** the heating of the RWGS reaction (6) is effected by burning of hydrocarbons from renewable sources, in particular by burning biomethane.

10. Process according to any of Claims 1 to 9, **characterized in that** in order to provide the CO₂ gas stream (31) polycarbonate material (37) after its use is recycled as polycarbonate material waste (38), and the polycarbonate material waste (38) is incinerated to afford carbon dioxide (31c) and the carbon dioxide (31c) is employed as input material in the purification (4).

11. Process according to any of Claims 1 to 10, **characterized in that** in the reaction (2) of at least phosgene (20) with at least one diol (23), not only at least one polycarbonate but also alkali metal chloride in solution (25) is formed, and this solution is subjected to a separation and purification (11), wherein said separated and purified alkali metal chloride (25a) present in aqueous solution is supplied to the chloralkali electrolysis (14).

12. Process according to any of the preceding claims, **characterized in that** the chloralkali electrolysis (14) is performed using electricity (28a) generated from renewable energy, in particular electricity (28a) obtained through the use of wind power, solar power or hydro power as desired.

13. Process according to any of the preceding claims, **characterized in that** the reaction (2) of at least phosgene (20) with at least one diol (23) to afford at least one polycarbonate (24) is additionally supplied with alkali metal hydroxide solution (30), preferably obtained from the chloralkali electrolysis (14).

14. Apparatus system for producing polycarbonate comprising at least the following apparatus parts in the following configuration
- at least one electrolyzer for chloralkali electrolysis containing at least one inlet for an aqueous solution of alkali metal chloride, in particular of sodium chloride, at least one outlet for chlorine and at least one outlet for hydrogen;
- at least one RWGS reactor containing at least one RWGS reaction zone, at least one heating element as an apparatus for supplying heat energy to the RWGS reaction zone, and at least one inlet for introducing CO₂ and hydrogen into the RWGS reaction zone and at least one outlet for the carbon monoxide-containing product gas from the RWGS reactor, with the proviso that
(i) at least one inlet for introducing hydrogen into the RWGS reaction zone is in fluid connection with at least one outlet for hydrogen of the at least one electrolyzer for the chloralkali electrolysis and
(ii) at least one inlet for introducing CO₂ into the RWGS reaction zone is in fluid connection with at least one supplying source of a purified CO₂ gas stream which has been produced by at least the steps of:
a) providing a CO₂ gas stream,
b) purifying the CO₂ gas stream of secondary components (in particular of nitrogen oxides, sulfur compounds, dust, water, oxygen and HCl) optionally by adsorption, gas scrubbing or catalytic treatment, and (iii) at least one outlet for the carbon monoxide-containing product gas from the RWGS reactor is in fluid connection with the water separation;
- at least one apparatus for separating water which comprises at least one inlet which is in fluid connection with the outlet for the carbon monoxide-containing product gas from the reformer and at least one outlet for the separated water and at least one outlet for the dried carbon monoxide-containing product gas;
- at least one apparatus for separating CO₂ which comprises at least one inlet which is in fluid connection with the outlet for the dried carbon monoxide-containing product gas from the apparatus for separating water and at least one outlet for the separated CO₂ which is in fluid connection with an inlet for CO₂ of the RWGS reactor and at least one outlet for the prepurified, carbon monoxide-containing product gas;
- at least one apparatus for separating H₂-CO containing at least one inlet which is in fluid connection with the outlet for the prepurified, carbon monoxide-containing product gas from the apparatus for separating CO₂, at least one outlet for the carbon monoxide and at least one outlet for the residual gas from the H₂-CO separation;
- at least one apparatus for producing phosgene which comprises at least one inlet for carbon monoxide which is in fluid connection with the outlet of the apparatus for separation of H₂-CO provided for the carbon monoxide and contains at least one outlet for phosgene and at least one outlet for chlorine, wherein at least one inlet for chlorine is in fluid connection with at least one outlet for chlorine of said electrolyzer;
- at least one apparatus for producing polycarbonate containing at least one inlet for diol, at least one outlet for polycarbonate and at least one inlet for phosgene which is in fluid connection with at least one outlet for phosgene of the apparatus for producing phosgene.

15. Use of provided carbon monoxide obtained by a process containing the steps of
providing a purified CO₂ gas stream produced by a method containing at least the steps of:
providing a CO₂ gas stream,
purifying the CO₂ gas stream of secondary components (in particular of nitrogen oxides, sulfur compounds, phosphorus compounds, dust, water, oxygen and HCl) optionally by adsorption, gas scrubbing or catalytic treatment to obtain a gas stream of purified carbon dioxide,
introducing hydrogen together with the purified CO₂ gas stream into an RWGS reaction zone and reacting the reactants according to the principle of RWGS to afford a product gas mixture containing not only unconverted reactant but also steam, CO and optionally byproducts, in particular lower hydrocarbons, especially preferably methane, separating the water of the steam from the product gas mixture,
separating unconverted carbon dioxide from the gas mixture of the RWGS reaction obtained from the separation, in particular by amine scrubbing, and recycling the unconverted carbon dioxide into the RWGS reaction,
separating the hydrogen unconverted in the RWGS reaction from the gas mixture of carbon monoxide and hydrogen obtained after the separation, in particular using a coldbox, and recycling the separated hydrogen into the RWGS reaction,
to produce polycarbonate by at least the steps of
producing at least chlorine and hydrogen by chloralkali electrolysis of alkali metal chloride, preferably sodium chloride, in aqueous solution, introducing the provided carbon monoxide into a phosgene synthesis,
supplying the previously formed chlorine into the phosgene synthesis,
synthesizing phosgene from carbon monoxide and chlorine,
reacting at least phosgene with at least one diol to afford at least one polycarbonate.

## Revendications

1. Procédé de fabrication d'un polycarbonate, comprenant au moins les étapes suivantes,
fabrication d'au moins du chlore (22) et de l'hydrogène (29b) par électrolyse chlore-alcali (14) du chlorure d'un métal alcalin, de préférence du chlorure de sodium, en solution aqueuse,
fourniture d'un courant de CO₂ gazeux purifié (33), qui avait été fabriqué par une méthode contenant au moins les étapes suivantes :
fourniture d'un courant de CO₂ gazeux (31),
purification (4) du courant de CO₂ gazeux (31) par élimination des constituants secondaires, en particulier des oxydes d'azote, des composés du soufre, des poussières, de l'eau, de l'oxygène et du HCl, éventuellement par adsorption, lavage du gaz ou traitement catalytique avec obtention d'un courant gazeux de dioxyde de carbone purifié (33),
injection d'hydrogène (29a), en même temps que du courant de CO₂ gazeux purifié (33), dans une zone de réaction RWGS et réaction (6) des réactifs selon le principe du RWGS pour obtenir un mélange gazeux produit (39) contenant, outre le réactif n'ayant pas réagi, en outre de la vapeur d'eau (26b), du CO (21) et éventuellement des produits secondaires (32), en particulier des hydrocarbures inférieurs, en particulier de préférence du méthane,
séparation (7) de l'eau de la vapeur d'eau (26b) du mélange gazeux produit (39),
séparation (8) du dioxyde de carbone n'ayant pas réagi (31b) du mélange gazeux (39a) obtenu par la séparation (7), de la réaction RWGS (6), en particulier par lavage à l'amine, et renvoi dans la réaction RWGS (6) du dioxyde de carbone (31b) n'ayant pas réagi,
séparation (9) de l'hydrogène n'ayant pas réagi dans la réaction RWGS (6) du mélange gazeux (39b) obtenu après la séparation (8), de monoxyde de carbone et d'hydrogène, en particulier par utilisation d'une boîte froide, et renvoi de l'hydrogène séparé (29c) dans la réaction RWGS (6),
injection, dans la synthèse du phosgène (1), du monoxyde de carbone (21) restant après la séparation (9),
envoi du chlore préalablement formé (22) dans la synthèse du phosgène (1),
synthèse (1) du phosgène (20) à partir du monoxyde de carbone (21) et du chlore (22),
réaction (2) d'au moins le phosgène (20) avec au moins un diol (23) pour obtenir au moins un polycarbonate (24).

2. Procédé selon la revendication 1, **caractérisé en ce qu'**on utilise pour la synthèse RWGS (6) du dioxyde de carbone purifié (33), qui a été fourni par la valorisation (10) du déchet (38) de matériau de polycarbonate par combustion (10b) et/ou par pyrolyse (10a) sous forme de dioxyde de carbone (31a), et qui est purifié dans la purification (4).

3. Procédé selon la revendication 2, **caractérisé en ce que** la combustion (10b) est mise en oeuvre par utilisation d'un gaz ayant une teneur en oxygène gazeux (O₂) d'au moins 30 % en volume, en particulier par utilisation d'oxygène gazeux (27a) qui a été obtenu à partir d'une électrolyse de l'eau (5).

4. Procédé selon la revendication 2 ou 3, **caractérisé en ce que** le gaz présente une teneur en oxygène gazeux (O₂) d'au moins 50 % en volume, de préférence d'au moins 95 % en volume, d'une manière particulièrement préférée d'au moins 99 % en volume, au mieux d'au moins 99,5 % en volume.

5. Procédé selon l'une des revendications 3 ou 4, **caractérisé en ce que** l'électrolyse de l'eau (5) est réalisée par utilisation d'un courant électrique (28a) obtenu à partir d'une énergie régénérative, en particulier par une énergie régénérative sous forme d'énergie éolienne, d'énergie solaire ou d'énergie hydraulique.

6. Procédé selon l'une des revendications 1 à 5, **caractérisé en ce que** l'électrolyse de l'eau (5) des revendications 3 ou 4 et/ou **en ce que** l'électrolyse au chlore-alcali (14) sont mises en oeuvre par utilisation d'un courant électrique provenant d'une énergie réinjectée, qui est obtenue lors de la combustion des déchets de matériau polycarbonate et/ou par mise en oeuvre de la réaction RWGS.

7. Procédé selon l'une des revendications 1 à 6, **caractérisé en ce qu'**à la réaction RWGS (6) est amenée une énergie thermique, qui est obtenue à l'aide d'un courant électrique (28) produit par une énergie régénérative, en particulier un courant électrique choisi au choix par utilisation de l'énergie éolienne, de l'énergie solaire ou de l'énergie hydraulique.

8. Procédé selon l'une des revendications 1 à 7, **caractérisé en ce que** l'amenée de l'énergie thermique à la réaction RWGS (6) a lieu par utilisation d'une énergie réinjectée, qui est obtenue par la combustion du déchet de matériau de polycarbonate (38).

9. Procédé selon l'une des revendications 1 à 8, **caractérisé en ce que** le chauffage de la réaction RWGS (6) a lieu par combustion d'hydrocarbures d'origine régénérative, en particulier par combustion de biométhane.

10. Procédé selon l'une des revendications 1 à 9, **caractérisé en ce que**, pour la fourniture du courant de CO₂ gazeux (31), on recycle un matériau de polycarbonate (37) après son utilisation comme déchet de matériau de polycarbonate (38), et le déchet de matériau de polycarbonate (38) est brûlé pour donner du dioxyde de carbone (31c), le dioxyde de carbone (31c) étant utilisé comme matière de départ pour la purification (4).

11. Procédé selon l'une des revendications 1 à 10, **caractérisé en ce que**, dans la réaction (2) de l'au moins phosgène (20) avec au moins un diol (23), il se forme en outre, outre au moins un polycarbonate, du chlorure d'un métal alcalin en solution (25), et cette solution est soumise à une séparation et à une purification (11), le chlorure d'un métal alcalin (25a) mentionné, se trouvant en solution aqueuse, séparé et purifié étant envoyé à l'électrolyse au chlore-alcali (14).

12. Procédé selon l'une des revendications précédentes, **caractérisé en ce que** l'électrolyse au chlore-alcali (14) est mise en oeuvre à l'aide d'un courant électrique (28a) produit par une énergie régénérative, en particulier un courant électrique (28a) obtenu au choix par utilisation d'énergie éolienne, d'énergie solaire ou d'énergie hydraulique.

13. Procédé selon l'une des revendications précédentes, **caractérisé en ce que** la réaction (2) de l'au moins phosgène (20) avec au moins un diol (23) est mise en oeuvre pour donner au moins un polycarbonate (24), en plus d'une solution d'hydroxyde d'un métal alcalin (30), de préférence obtenue par l'électrolyse au chlore-alcali (14) .

14. Dispositif de fabrication d'un polycarbonate, comprenant au moins les parties de dispositif suivantes, selon la configuration ci-après
- au moins un électrolyseur pour l'électrolyse au chlore-alcali, contenant au moins une entrée pour une solution aqueuse du chlorure d'un métal alcalin, en particulier de chlorure de sodium, au moins une sortie pour le chlore et au moins une sortie pour l'hydrogène ;
- au moins un réacteur RWGS, contenant au moins une zone de réaction RWGS, au moins un élément chauffant, en tant que dispositif pour amenée de l'énergie thermique à la zone de réaction RWGS, ainsi qu'une entrée pour introduire du CO₂ et de l'hydrogène dans la zone de réaction RWGS et au moins une sortie pour le produit gazeux contenant du monoxyde de carbone sortant du réacteur RWGS, à la condition que
(i) au moins une entrée soit prévue pour introduire de l'hydrogène dans la zone de réaction RWGS en communication fluidique avec au moins une sortie pour l'hydrogène de l'au moins un électrolyseur pour l'électrolyse au chlore-alcali, et
(ii) au moins une entrée soit prévue pour introduire du CO₂ dans la zone de réaction RWGS en communication fluidique avec au moins une source d'alimentation d'un courant de CO₂ gazeux purifié, qui a été fabriqué par au moins les étapes suivantes :
a) fourniture d'un courant de CO₂ gazeux,
b) purification du courant de CO₂ gazeux par élimination des constituants secondaires (en particulier les oxydes d'azote, les composés du soufre, les poussières, l'eau, l'hydrogène et le HCl), au choix par adsorption, lavage du gaz ou traitement catalytique, et
(iii) au moins une sortie pour le produit gazeux contenant du monoxyde de carbone sortant du réacteur RWGS en communication fluidique avec la séparation de l'eau ;
- au moins un dispositif pour séparer l'eau, qui comprend au moins une entrée qui est en communication fluidique avec la sortie pour le produit gazeux contenant du monoxyde de carbone sortant du reformeur, et au moins une sortie pour l'eau séparée et au moins une sortie pour le produit gazeux séché contenant du monoxyde de carbone ;
- au moins un dispositif pour séparer le CO₂, qui comprend au moins une entrée qui est en communication fluidique avec la sortie pour le produit gazeux séché contenant du monoxyde de carbone sortant du dispositif de séparation de l'eau, et au moins une sortie pour le CO₂ gazeux, qui est en communication fluidique avec une entrée pour le CO₂ du réacteur RWGS, et au moins une sortie pour le produit gazeux prépurifié contenant du monoxyde de carbone ;
- au moins un dispositif de séparation H₂-CO, contenant au moins une entrée qui est en communication fluidique avec la sortie du produit gazeux prépurifié contenant du monoxyde de carbone sortant du dispositif de séparation du CO₂, au moins une sortie pour le monoxyde de carbone et au moins une sortie pour le gaz résiduel de la séparation H₂-CO ;
- au moins un dispositif de fabrication de phosgène, qui comprend au moins une entrée pour le monoxyde de carbone, qui est en communication fluidique avec la sortie prévue pour le monoxyde de carbone du dispositif de séparation H₂-CO en communication fluidique, ainsi qu'au moins une sortie pour le phosgène et au moins une entrée pour le chlore, au moins une entrée pour le chlore étant en communication fluidique avec au moins une sortie pour le chlore dudit électrolyseur ;
- au moins un dispositif de fabrication de polycarbonate, contenant au moins une entrée pour le diol, au moins une sortie pour le polycarbonate et au moins une entrée pour le phosgène, qui est en communication fluidique avec au moins une sortie pour le phosgène du dispositif de fabrication du phosgène.

15. Utilisation d'un monoxyde de carbone fourni, obtenu par un procédé comprenant les étapes suivantes
fourniture d'un courant de CO₂ gazeux purifié, qui a été fabriqué par une méthode contenant au moins les étapes suivantes :
fourniture d'un courant de CO₂ gazeux,
purification du courant de CO₂ gazeux par élimination des constituants secondaires (en particulier des oxydes d'azote, des composés du soufre, des composés du phosphore, des poussières, de l'eau, de l'oxygène et du HCl) au moins par adsorption, lavage du gaz ou traitement catalytique, avec obtention d'un courant gazeux de dioxyde de carbone purifié,
injection d'hydrogène, en même temps que du courant de CO₂ gazeux purifié, dans une zone de réaction RWGS et réaction des réactifs selon le principe du RWGS pour obtenir un mélange de produits gazeux contenant, outre le réactif n'ayant pas réagi, en outre de la vapeur d'eau, du CO et éventuellement des produits secondaires, en particulier des hydrocarbures inférieurs, d'une manière particulièrement préférée du méthane,
séparation de l'eau de la vapeur d'eau du mélange de produits gazeux,
séparation du dioxyde de carbone n'ayant pas réagi du mélange gazeux de la réaction de RWGS obtenu par la séparation, en particulier par lavage à l'amine, et renvoi dans la réaction RWGS du dioxyde de carbone n'ayant pas réagi,
séparation de l'hydrogène n'ayant pas réagi dans la réaction RWGS du mélange gazeux obtenu après la séparation, de monoxyde de carbone et d'hydrogène, en particulier par utilisation d'une boîte froide, et renvoi de l'hydrogène séparé dans la réaction RWGS,
pour fabriquer un polycarbonate par au moins les étapes suivantes :
fabrication d'au moins du chlore et de l'hydrogène par électrolyse au chlore-alcali du chlorure d'un métal alcalin, en particulier de chlorure de sodium, en solution aqueuse,
injection du monoxyde de carbone préparé dans une synthèse du phosgène,
amenée, dans la synthèse du phosgène, du chlore préalablement formé,
synthèse de phosgène à partir de monoxyde de carbone et de chlore,
réaction de l'au moins phosgène avec au moins un diol pour obtenir au moins un polycarbonate.
